(19) Europäisches Patentamt
European Patent Office
Office européen des brevets

(11) **EP 4 379 543 B1**

(12) **EUROPEAN PATENT SPECIFICATION**

(45) Date of publication and mention
of the grant of the patent:
**28.01.2026 Bulletin 2026/05**

(21) Application number: **22851666.2**

(22) Date of filing: **19.05.2022**

(51) International Patent Classification (IPC):
*G06F 9/455* (2018.01)    *H04L 67/1095* (2022.01)

(52) Cooperative Patent Classification (CPC):
**G06F 16/11; G06F 9/455; G06F 16/172;**
**H04L 67/06; H04L 67/1095;** H04L 67/1097

(86) International application number:
**PCT/CN2022/093910**

(87) International publication number:
**WO 2023/010948 (09.02.2023 Gazette 2023/06)**

(54) **CLOUD DESKTOP DATA MIGRATION METHOD, SERVICE NODE, MANAGEMENT NODE, SERVER, ELECTRONIC DEVICE, AND COMPUTER-READABLE STORAGE MEDIUM**

CLOUD-DESKTOP-DATENMIGRATIONSVERFAHREN, DIENSTKNOTEN, VERWALTUNGSKNOTEN, SERVER, ELEKTRONISCHE VORRICHTUNG UND COMPUTERLESBARES SPEICHERMEDIUM

PROCÉDÉ DE MIGRATION DE DONNÉES DE BUREAU EN NUAGE, N?UD DE SERVICE, N?UD DE GESTION, SERVEUR, DISPOSITIF ÉLECTRONIQUE ET SUPPORT DE STOCKAGE LISIBLE PAR ORDINATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.08.2021 CN 202110879884**

(43) Date of publication of application:
**05.06.2024 Bulletin 2024/23**

(73) Proprietor: **ZTE Corporation
Shenzhen, Guangdong 518057 (CN)**

(72) Inventor: **CHEN, Baiying
Shenzhen, Guangdong 518057 (CN)**

(74) Representative: **Canzler & Bergmeier
Patentanwälte
Partnerschaft mbB
Despag-Straße 6
85055 Ingolstadt (DE)**

(56) References cited:
CA-A1- 2 959 959        CN-A- 102 122 303
CN-A- 105 100 150       CN-A- 106 716 353
CN-A- 107 885 580       CN-A- 111 930 315
CN-A- 112 965 955       CN-B- 112 965 955
US-A1- 2013 219 043     US-A1- 2015 149 729

• ANONYMOUS: "Online cost optimization algorithms for tiered cloud storage services - ScienceDirect", 1 January 2019 (2019-01-01), XP093207317, Retrieved from the Internet <URL:https://www.sciencedirect.com/science/article/pii/S0164121219302316?via=ihub> [retrieved on 20240920]

**Description**

TECHNICAL FIELD

The present application relates to the field of computer technologies, and specifically relates to a cloud desktop data migration method, a service node, a management node, a server, an electronic device, and a computer-readable storage medium.

BACKGROUND

The cloud desktop is a basic use scenario of cloud computing, in which a plurality of virtual desktops are operated on a physical server. When using the cloud desktop for work, a user can access a virtual machine desktop in a network through a terminal, thereby replacing the conventional terminal devices such as a desktop computer, a laptop, or the like. By establishing the cloud desktop across multiple devices, different use scenarios of users at different locations can be satisfied, and when the user switches or roams among a plurality of cloud desktops, user data should be switched or roamed together with the cloud desktop, so that the user can continuously use the user data specific to him/her.

Current roaming of the cloud desktop requires resources corresponding to an original cloud desktop to be completely migrated to a local device of a new desktop, or implements roaming of the cloud desktop through a mirrored cloud desktop, which has the problems of long migration period, high network bandwidth occupation, high storage resource occupation, and the like. Canadian patent application publication No. CA 2959959 A1 relates to virtual desktop migration. It may be determined that a cloud desktop should be migrated from a current region. A destination region to which the cloud desktop will be migrated can be identified. A data volume of the cloud desktop may be copied from the current region to the destination region. The data volume at the current region and the data volume at the destination region may be maintained in sync during the copying. Upon completion of the copying, a current user session associated with the cloud desktop at the current region may be frozen, a current memory and processor state of the current user session may be copied to the destination region, and a second cloud desktop instance at the destination region may be started using the copied data volume and current memory and processor state. The current user session may be connected to the second cloud desktop instance. Non-patent document "Anonymous: "Online cost optimization algorithms for tiered cloud storage services - Science Direct", 1 January 2019, XP093207317" provides online cost optimization algorithms for tiered cloud storage services. Chinese patent application publication No. CN 102122303 A discloses a method for data migration, service system and server equipment. Data is migrated among different pieces of storage equipment at different access speed ranks according to the concerned degree of the data. According to the scheme by the invention, file storage can be automatically optimized, data is migrated among different pieces of storage equipment at different access speed ranks, hot spot data is immediately migrated to the storage equipment with the highest access speed, non hot spot data is migrated to the storage equipment at low access speed in time, so that the user can more quickly access the hot spot data, and the utilization ratio and the system service quality of the storage equipment are improved. Chinese patent application publication No. CN 112965955 A relates to a data migration method and device, computer equipment and a storage medium. The method comprises the following steps: acquiring a previous login server of a target account logged in at a local server; and if the local server side is different from the last login server side, migrating the target data of the last login server side to the local server side. According to the invention, the target data (such as user data) can be migrated from the server side corresponding to one site to the server side corresponding to another site according to actual conditions, so that the migration of heterogeneous storage user information among multiple sites is solved. Therefore, the user can obtain more user use permissions at a new site, and the user experience is not affected.

SUMMARY

The features of the cloud desktop data migration method, the service node, the management node and the server according to the present invention are defined in the independent claims, and the preferable features according to the present invention are defined in the dependent claims. In a first aspect, an embodiment of the present application provides a cloud desktop data migration method applied to a service node, which includes: determining, according to attribute information of a cloud desktop logged in by a terminal, whether to migrate user data, wherein the attribute information of the cloud desktop logged in by the terminal is information determined according to acquired configuration information of a management node; determining, when it is determined to migrate the user data, hotspot data according to access popularity corresponding to the user data; and migrating the hotspot data.

In a second aspect, an embodiment of the present application provides a cloud desktop data migration method applied to a management node, which includes: generating configuration information according to acquired attribute information of a cloud desktop logged in by a terminal; and sending the configuration information to a service node so that the service node determines, according to the attribute information of the cloud desktop logged in by the terminal, whether to migrate user data, and when it is determined to migrate the user data, determines hotspot data according to access popularity corresponding to the user data, and migrates the hotspot data.

In a third aspect, an embodiment of the present application provides a service node, including: a first determination module configured to determine, according to attribute information of a cloud desktop logged in by a terminal, whether to migrate user data, wherein the attribute information of the cloud desktop logged in by the terminal is information determined according to acquired configuration information of a management node; a second determination module configured to determine, when it is determined to migrate the user data, hotspot data according to access popularity corresponding to the user data; and a migration module configured to migrate the hotspot data.

In a fourth aspect, an embodiment of the present application provides a management node, including: a generation module configured to generate configuration information according to acquired attribute information of a cloud desktop logged in by a terminal; and a configuration module configured to send the configuration information to a service node so that the service node determines, according to the attribute information of the cloud desktop logged in by the terminal, whether to migrate user data, and when it is determined to migrate the user data, determines hotspot data according to access popularity corresponding to the user data, and migrates the hotspot data.

In a fifth aspect, an embodiment of the present application provides a server, including: a service node and/or a management node; wherein the service node is configured to implement the cloud desktop data migration method according to the first aspect of the present application; and the management node is configured to implement the cloud desktop data migration method according to the second aspect of the present application.

In a sixth aspect, an embodiment of the present application provides an electronic device, including: one or more processors; a memory having one or more computer programs stored thereon which, when executed by the one or more processors, cause the one or more processors to implement the cloud desktop data migration method according to any embodiment of the present application.

In a seventh aspect, an embodiment of the present application provides a computer-readable storage medium having a computer program stored thereon which, when executed by a processor, causes the cloud desktop data migration method according to any embodiment of the present application to be implemented.

With respect to the above embodiments and other aspects of the present application and implementations thereof, further description is provided in the brief description of drawings, the detailed description of embodiments, and the claims.

BRIEF DESCRIPTION OF DRAWINGS

FIG. 1 shows a schematic flowchart of a cloud desktop data migration method according to an embodiment of the present application.

FIG. 2 shows a schematic flowchart of a cloud desktop data migration method according to an embodiment of the present application.

FIG. 3 shows a schematic flowchart of a cloud desktop data migration method according to an embodiment of the present application.

FIG. 4 shows a schematic structural diagram of a service node according to an embodiment of the present application.

FIG. 5 shows a schematic structural diagram of a management node according to an embodiment of the present application.

FIG. 6 shows a schematic structural diagram of a server according to an embodiment of the present application.

FIG. 7 shows schematic network connection between devices in a cloud desktop data migration system according to an embodiment of the present application.

FIG. 8 shows a schematic structural diagram of modules in a cloud desktop data migration system according to an embodiment of the present application.

FIG. 9 shows a schematic structural diagram of a storage unit according to an embodiment of the present application.

FIG. 10 is a schematic flowchart of a method for migrating hotspot data by a service node according to an embodiment of the present application.

FIG. 11 is a schematic flowchart of a method for reading user data by a terminal through a second type cloud desktop according to an embodiment of the present application.

FIG. 12 is a schematic flowchart of a method for reading user data by a terminal through a shared cloud desktop according to an embodiment of the present application.

FIG. 13 is a schematic flowchart of a method for writing hotspot data by a terminal through a second type cloud desktop according to an embodiment of the present application.

FIG. 14 is a schematic flowchart of a method for clearing a storage unit corresponding to a second type cloud desktop according to an embodiment of the present application.

FIG. 15 is a block diagram showing an exemplary hardware architecture of a computing device capable of implementing the cloud desktop data migration method and apparatus according to an embodiment of the present application.

## DETAIL DESCRIPTION OF EMBODIMENTS

For clarity and better understanding of the objects, technical solution and advantages of the application, embodiments of the present application will now be described in detail in conjunction with the accompanying drawings. It should be noted that the embodiments of the present application and features therein may be combined with each other in any manner as long as they are not contradictory.

By establishing the cloud desktop across multiple devices, different use scenarios of users at different locations can be satisfied, and when the user switches or roams among a plurality of cloud desktops, user data should be switched or roamed together with the cloud desktop, so that the user can continuously use the user data specific to him/her.

At present, to migrate user data corresponding to a cloud desktop, resources corresponding to an original cloud desktop may be completely migrated to a local device of a new desktop. However, since the user will not modify or use all the data every time, lots of data in the migrated data are not accessed by the user. Moreover, migration of all data will waste a large amount of network bandwidth resources, resulting in a long data migration period and high storage resource occupation. Roaming of the cloud desktop may also be implemented through a mirrored cloud desktop, but the network delay between data centers at different places may be up to dozens of milliseconds, and when a second type cloud desktop accesses a data storage unit at a different place, the problems of prolonged access time delay and poor user experience will occur. A service node corresponding to the second type cloud desktop logged in by the user is a roaming service node, which is located at a different geographical location from a home service node.

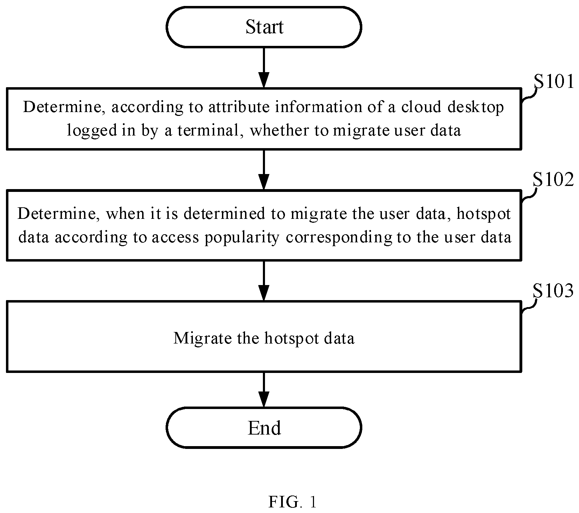

A first aspect of the present application provides a cloud desktop data migration method. FIG. 1 shows a schematic flowchart of a cloud desktop data migration method according to an embodiment of the present application. The cloud desktop data migration method may be applied to a service node which may be arranged in a server. As shown in FIG. 1, the cloud desktop data migration method according to the embodiment of the present application may include the following operations S101 to S103.

At operation S101, determining, according to attribute information of a cloud desktop logged in by a terminal, whether to migrate user data.

The attribute information of the cloud desktop logged in by the terminal is information determined according to acquired configuration information of a management node. The attribute information of the cloud desktop includes: a positional relationship between the cloud desktop and the home service node to which the cloud desktop belongs.

Whether a distance between the cloud desktop and the home service node exceeds a preset distance threshold, e.g., whether the cloud desktop and the home service node are in the same city, or whether the cloud desktop and the home service node are located at the same data center, or the like.

For example, the management node sends configuration information to the service node, or the service node actively acquires configuration information from the management node. The configuration information may include attribute information of the cloud desktop, including a type of the cloud desktop, e.g., a first type cloud desktop and/or a second type cloud desktop. A service node of the home location corresponding to a user account logging in the first type cloud desktop is a home service node, a service node corresponding to logging in the second type cloud desktop is a roaming service node, and the roaming service node is located at a different geographical location from the home service node.

At operation S102, determining, when it is determined to migrate the user data, hotspot data according to access popularity corresponding to the user data.

The access popularity is a value representing an access frequency of the user data, and data frequently used by a user in the user data can be found according to the access popularity corresponding to the user data, so that the hotspot data can be obtained by screening from the user data, thereby facilitating processing of the hotspot data by the user.

At operation S103, migrating the hotspot data.

The hotspot data may be downloaded to the local storage unit corresponding to the cloud desktop logged in by the user, or the hotspot data is mirrored to the local storage unit corresponding to the cloud desktop logged in by the user, so that it is not necessary to migrate all data of the user, and the migrated data volume is reduced.

For example, the user data includes 100 files, of which only 10 files are included in the hotspot data, so that instead of downloading all the 100 files, only the 10 hotspot files are desired to be downloaded to the local storage unit corresponding to the cloud desktop logged in by the user, which reduces the downloaded data volume, avoids network bandwidth waste, while improving the access efficiency of the hotspot data.

In the cloud desktop data migration method provided in the present application, whether to migrate user data is determined according to the attribute information of the cloud desktop logged in by the terminal, so as to ensure that the terminal can rapidly acquire the hotspot data; and when it is determined to migrate the user data, instead of migrating all the user data, hotspot data is determined according to access popularity of the user data and then migrated, which can reduce the migrated data volume, avoid high network bandwidth occupation in the process of data migration, and reduce the migration period.

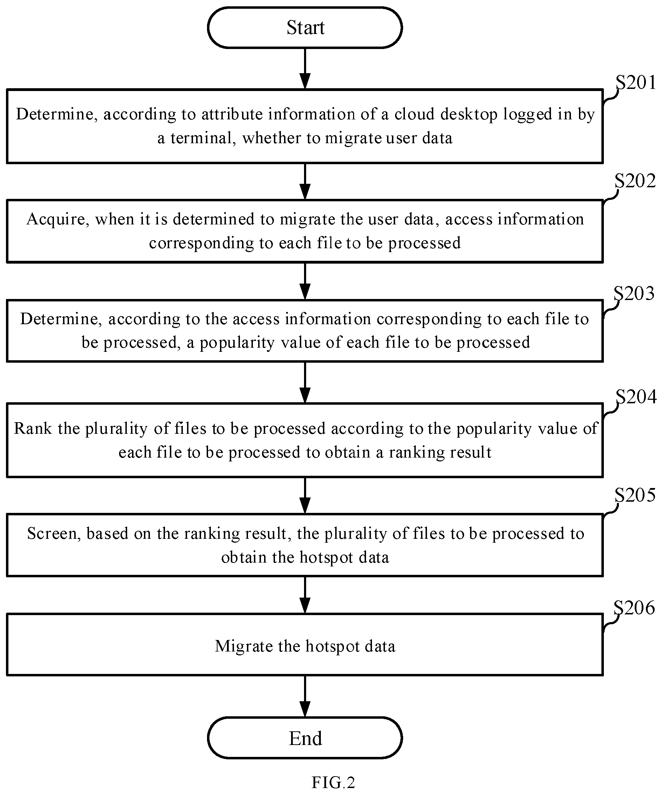

FIG. 2 shows a schematic flowchart of a cloud desktop data migration method according to an embodiment of the present application. The cloud desktop data migration method may be applied to a service node which may be arranged in a server. The cloud desktop data migration method shown in FIG. 2 differs from that of FIG. 1 in that: the user data includes a plurality of files to be processed; and the method includes: determining, according to the access information corresponding to each file to be processed, a popularity value of each file to be processed, and then ranking the plurality of files to be processed according to the popularity value of each file to be processed to screen the hotspot data from the plurality of files to be processed.

As shown in FIG.2, the cloud desktop data migration method according to the embodiment of the present application includes the following operations S201 to S206.

At operation S201, determining, according to attribute information of a cloud desktop logged in by a terminal, whether to migrate user data.

Determining, according to attribute information of the cloud desktop logged in by the terminal, whether to migrate user data includes: determining to migrate the user data when it is determined that the desktop roaming identifier corresponding to the cloud desktop logged in by the terminal represents that a user account logged in the cloud desktop supports data roaming.

In some implementations, the attribute information of the cloud desktop includes: a desktop roaming identifier, where the desktop roaming identifier represents whether a user account logging in the cloud desktop supports data roaming.

It should be noted that different from the first type cloud desktop, for the second type cloud desktop, a service node of the home location corresponding to a user account logging in the first type cloud desktop is a home service node, a service node where the second type cloud desktop is logged in is a roaming service node, and the roaming service node is located at a different geographical location from the home service node. If the user data desired by the terminal is not stored in the storage unit corresponding to the second type cloud desktop, the hotspot data in the storage unit corresponding to the first type cloud desktop has to be migrated to the storage unit corresponding to the second type cloud desktop, so that the efficiency of data acquisition by the second type cloud desktop is increased, and the user experience is improved.

At operation S202, acquiring, when it is determined to migrate the user data, access information corresponding to each file to be processed.

The user data includes a plurality of files to be processed, each of which corresponds to different pieces of access information. For example, the access information corresponding to the file to be processed may include: any one or more of a data type of the file to be processed, time information of the file to be processed, access path information of the file to be processed, or a data volume of the file to be processed.

By reflecting the access information corresponding to the file to be processed through various information, the access condition of a user to the file to be processed can be comprehensively measured, and the processing efficiency of the file to be processed can be increased.

At operation S203, determining, according to the access information corresponding to each file to be processed, a popularity value of each file to be processed.

The popularity value of the file to be processed may be determined by combining any one or more of the data type of the file to be processed, time information of the file to be processed, access path information of the file to be processed, or the data volume of the file to be processed in the access information. By determining the popularity value of each file to be processed through a combination of different pieces of access information or access information, features of different files to be processed can be embodied, and accuracy of the popularity value of each file to be processed can be ensured.

In some implementations, the time information of the file to be processed includes: historical access time of the file to be processed; and determining, according to the access information corresponding to each file to be processed, the popularity value of each file to be processed includes: acquiring current time; determining a time weight according to the historical access time of the file to be processed and the current time; and determining a popularity value of the file to be processed according to the time weight and the data volume of the file to be processed.

In some implementations, a difference between the historical access time of the file to be processed and the current time may be calculated to obtain a time difference; and then a time weight may be obtained according to the time difference. For example, the access popularity of each file to be processed in the last n days is counted, where n is an integer greater than or equal to 1. Let y be a difference (e.g., number of days) between the historical access time and the current time, and the time weight is $W\_Time\_y$, where y is an integer greater than or equal to 0 and less than or equal to (n-1). For example, assuming that n is equal to 7, when the difference between the historical access time and the current time is 0 (i.e., when y is 0), the file to be processed has a maximum time weight $W\_Time\_0$, i.e., 1; when the difference between the historical access time and the current time is 1 (i.e., when y is 1), the file to be processed has a time weight $W\_Time\_1=6/7$; and when the difference between the historical access time and the current time is y, the file to be processed has a time weight $W\_Time\_y=(7-y)/7$.

The above unit of n or y is merely illustrative, and for example, the access popularity of each file to be processed in the last n hours may be counted when needed, in which case y may be the number of hours.

Then, the number of bytes of the file to be processed accessed each time within a preset time period is weighted by the time weight, and then a sum thereof is calculated to obtain a popularity value of each file to be processed. Therefore, the popularity value can reflect both an access frequency and a data volume of each file to be processed, so that important files can be preferentially accessed, and the access efficiency of data is improved.

At operation S204, ranking the plurality of files to be processed according to the popularity value of each file to be processed to obtain a ranking result.

In some implementations, the ranking result includes: an ID and a popularity value of each file to be processed.

A magnitude of the popularity value of each file to be processed can reflect whether the file to be processed is accessed, an access frequency of the file to be processed, or other information. A larger popularity value of the file to be processed indicates a higher access frequency of the file to be processed. In other words, the more frequently a file to be processed is used by a user, the more important the file to be processed is.

At operation S205, screening, based on the ranking result, the plurality of files to be processed to obtain the hotspot data.

Based on the popularity values in the ranking result, files among the plurality of files to be processed with larger popularity values are screened and determined as the hotspot data according to IDs of the files to be processed.

For example, according to a migrated volume of the user data configured by the management node, the hotspot data ranked high in the ranking result (for example, the top 10 pieces of hotspot data in the ranking result) is migrated; and if a data volume of the hotspot data is smaller than the migrated volume of the user data, all the hotspot data are migrated, so that the user can obtain the hotspot data while avoiding occupying too much network bandwidth in the data migration process, thereby reducing the migration period.

At operation S206, migrating the hotspot data.

It should be noted that operation S206 is the same as operation S103 in FIG. 1, and thus is not repeated here.

In the cloud desktop data migration method provided in the present application, when it is determined to migrate the user data, access information corresponding to each file to be processed is acquired to comprehensively measure the access condition of a user to the file to be processed, and increase the processing efficiency of the file to be processed. According to the access information corresponding to each file to be processed, the popularity value of each file to be processed is determined, so that features of different files to be processed can be embodied, and accuracy of the popularity value of each file to be processed can be ensured. The plurality of files to be processed are ranked according to the popularity value of each file to be processed, to obtain a ranking result which can reflect whether each file to be processed is accessed, an access frequency of each file to be processed, or other information. According to the ranking result, hotspot data are screened from the plurality of files to be processed and migrated, so that the user can obtain the hotspot data while avoiding occupying too much network bandwidth in the data migration process, thereby reducing the migration period.

In some implementations, determining, according to the access information corresponding to each file to be processed, the popularity value of each file to be processed in operation S203 may be implemented by: determining, according to the data type of the file to be processed, a weight of the data type corresponding to the file to be processed; and determining a popularity value of the file to be processed according to the weight of the data type, the data volume of the file to be processed, a time weight in the time information of the file to be processed, and a path weight in the access path information of the file to be processed.

The data type of the file to be processed may include any one or more of a text file, an image file, an email, or a video file. Different weights may be set for different data types. It should be noted that the data types of the file to be processed described above are merely illustrative and may be specifically set according to actual needs, and other data types not mentioned herein are also within the protection scope of the present application, which are not described in detail here.

For example, weights of m data types are set, and each data type may have a weight represented as $W\_Type\_x$, where x is an integer greater than or equal to 1 and less than or equal to m, and m is an integer greater than or equal to 1. For example, $W\_Type\_0$ is set to be a weight of a default data type, e.g., $W\_Type\_0$ is set to 0.1; $W\_Type\_1$ is set to represent a weight of the data type of text file, where for example, for any one or more of text file types such as word, excel, ppt, pdf, txt and the like, $W\_Type\_1$ is set to 1; $W\_Type\_2$ is set to represent a weight of the data type of email, where for example, $W\_Type\_2$ may be set to 1; $W\_Type\_3$ is set to represent a weight of an image or picture file, where for example, $W\_Type\_3$ may be set to 0.8; and $W\_Type\_4$ is set to represent a weight of a video file, where for example, $W\_Type\_4$ may be set to 0.5.

For another example, if the data type of the file to be processed is text data, the weight of the data type of the file to be processed may be set to 0.2; if the data type of the file to be processed is image data, the weight of the data type of the file to be processed may be set to 0.3; if the data type of the file to be processed is video data, the weight of the data type of the file to be processed may be set to 0.6, so on and so forth.

The weights of different data types can reflect importance degrees of the data types, so that important files can be preferentially accessed, and the access efficiency of data is improved.

The path weight in the access path information of the file to be processed may be determined according to a type of the accessed file.

For example, the path weight may be set as follows: for example, path weights of z access paths are set to W_Path_z, respectively, where z is an integer greater than or equal to 1. For example, if an access path 1 is a path corresponding to a system file (e.g., the access path C:/windows, or the like), a path weight W_Path_1 of the access path 1 may be set to 0; and if an access path 2 is not a system file (e.g., D:/w/zy/er, or the like), a path weight W_Path_2 of the access path 2 may be set to 1.

It should be noted that when the path weight is determined to be 1, it indicates that all files in the access path are counted, and when the path weight is determined to be 0, it indicates that none of the files in the access path are counted. In other words, the system file corresponding to the access path with the path weight 0 should be filtered out, so as to avoid statistical errors caused by too many system files, and improve the accuracy of the file popularity value.

In some implementations, the cloud desktop data migration method further includes: after determining, according to attribute information of the cloud desktop logged in by the terminal, whether to migrate user data, reading the user data in a storage unit corresponding to the service node.

The service node includes: a home service node, or the home service node and a roaming service node, where the home service node is a service node for a user account at a home location, and the roaming service node is a service node for the user account at a roaming location.

For example, if the terminal is bound to a registered user and the home location corresponding to the registered user is Beijing, then the home location corresponding to the terminal is Beijing; if the registered user logs in the terminal at the home location, the terminal accesses a storage unit on a home service node so that the registered user can obtain the user data desired by the registered user; and if the registered user moves to another city (e.g., Shanghai, or the like), for example, the registered user logs in a certain terminal in Shanghai, the terminal has to be connected to a roaming service node so that the roaming service node can be connected to the home service node corresponding to the registered user, and the registered user can obtain the desired hotspot data.

It should be noted that the terminal may not be bound to a certain registered user, the user may log in a cloud desktop through any terminal, and one terminal may be used by any user to log in a cloud desktop, where different types of cloud desktops are distinguished and entered according to setting information of the user account, and a corresponding cloud desktop is displayed to the user.

Under the condition of determining that the terminal is connected to a roaming service node, the terminal can obtain the hotspot data from a local storage unit corresponding to the roaming service node, or obtain the hotspot data through communication information between the terminal and the home service node. Therefore, the registered user can use the hotspot data normally, and the user experience is improved.

In some implementations, the storage unit corresponding to the service node includes: a shared storage unit corresponding to the home service node, and a local storage unit corresponding to the roaming service node; and reading the user data in the storage unit corresponding to the service node includes: when it is determined that the user data is stored in the local storage unit corresponding to the roaming service node, reading the user data from the local storage unit corresponding to the roaming service node; and when it is determined that the user data is not stored in the local storage unit corresponding to the roaming service node, reading the user data from the shared storage unit corresponding to the home service node.

By reading the user data from the local storage unit corresponding to the roaming service node, the terminal can conveniently obtain the user data. However, if the terminal logs in a roaming service node and the user data is not stored in the local storage unit corresponding to the roaming service node, the home service node has to interact with the roaming service node so that the roaming service node can read the user data from a shared storage unit corresponding to the home service node. Thereby, the terminal can rapidly obtain the user data, and the user experience can be improved.

In some implementations, migrating the hotspot data includes: migrating the hotspot data stored in the shared storage unit corresponding to the home service node to the storage unit corresponding to the roaming service node.

When the terminal logs in a roaming service node, it is not necessary to migrate all user data stored in the shared storage unit corresponding to the home service node to the roaming service node, thereby saving the network bandwidth in the data transmission process. In addition, by migrating the hotspot data stored in the shared storage unit corresponding to the home service node to the storage unit corresponding to the roaming service node, the problems of severe network delay in long-distance data transmission can be avoided, and the data access efficiency can be effectively improved.

In some implementations, the cloud desktop data migration method further includes: after migrating the hotspot data, acquiring updated data fed back from the terminal.

After obtaining the hotspot data, the terminal may process the hotspot data, update the hotspot data into updated data, and then feed the updated data back to the service node.

For example, in the case of determining that the terminal logs in a roaming service node, the updated data has to be transmitted from a local storage unit of the roaming service node to a shared storage unit in the home service node corresponding to the terminal; and in the case of determining that the terminal logs in a home service node, the updated data has to be transmitted from the local storage unit of the home service node corresponding to the terminal to the shared storage unit in the home service node, so as to ensure that the user data stored in the shared storage unit of the home service node is updated in time, and that only one complete set of the user data is stored in the shared storage unit of the home service node across the whole network, thereby avoiding waste of storage resources.

In some implementations, the cloud desktop data migration method further includes: before transmitting the updated data to the shared storage unit of the home service node, acquiring a cache identifier sent from a management node; and determining, according to the cache identifier, whether to cache the updated data to the roaming service node.

The cache identifier represents whether the terminal caches the updated data corresponding to the second type cloud desktop. For example, when the cache identifier is 1, it may be determined that the terminal caches the updated data corresponding to the second type cloud desktop; and when the cache identifier is 0, it may be determined that the terminal does not cache the updated data corresponding to the second type cloud desktop. The above values of the cache identifier are merely illustrative, and may be set according to the actual situation, and values of other cache identifiers that are not described are also within the protection range of the present application, which are not described in detail here.

By acquiring the cache identifier sent from the management node, it is determined whether to cache the updated data to the roaming service node, so that the waste of storage resources caused by storing the updated data in different places can be avoided, while ensuring that the updated data is stored in time and ensuring the accuracy of data.

In some implementations, determining, according to the cache identifier, whether to cache the updated data to the roaming service node includes: when it is determined that the cache identifier indicates that the updated data is to be cached to the roaming service node, caching the updated data to a local storage unit corresponding to the roaming service node, and synchronizing the updated data to a shared storage unit corresponding to the home service node; and when it is determined that the cache identifier indicates that the updated data is not to be cached to the roaming service node, transmitting the updated data to the shared storage unit corresponding to the home service node.

The updated data is stored at different storage positions under different conditions, so that the user can acquire the updated data in time, and the transmission delay of the data is reduced. Moreover, the updated data is transmitted or synchronized to the shared storage unit corresponding to the home service node at any condition, so that the user data stored in the shared storage unit corresponding to the home service node can be updated in time, and the accuracy of the data is improved.

In some implementations, caching the updated data to the local storage unit corresponding to the roaming service node includes: accumulating access popularity corresponding to the updated data according to access information corresponding to the updated data; and caching the updated data and the corresponding access popularity to the local storage unit corresponding to the roaming service node.

By calculating and accumulating the access popularity corresponding to the updated data with the access information of the updated data, the access popularity corresponding to the updated data is more accurate, and the updated data can be ensured to be obtained in time when accessed next time. Further, the updated data and the corresponding access popularity are both cached to the local storage unit corresponding to the roaming service node, so that the terminal can obtain the updated data in time without accessing the shared storage unit corresponding to the terminal again, thereby reducing remote data transmission and improving the access efficiency of the data.

In some implementations, the shared storage unit corresponding to the home service node includes: any one or more of a network attached storage device, a distributed file storage device, or a cloud storage; and the local storage unit corresponding to the roaming service node includes: any one or more of a redundant array of independent disks (RAID), a distributed storage device or a hard disk.

The network attached storage device may be a dedicated data storage server which takes data as a center, completely separates the storage device from the server, and performs centralized management on the data, thereby reducing the dependence on network bandwidth, improving the storage performance and reducing the maintenance cost.

The RAID is a disk group of a huge capacity consisting of a plurality of independent disks, which improves the performance of the entire disk system through additive effects generated by individual disks providing data. Data can be divided into a plurality of segments by RAID, and different segments of data are stored on respective hard disks, so that the data can be accessed in blocks, the mechanical seek time of the disk is reduced, and the data access speed is increased. Further, redundancy protection of the data is implemented in a mirroring mode or by storing parity information.

The distributed file storage device adopts an extensible storage structure, shares a storage load among a plurality of storage devices, and positions storage information by a position server, which can not only improve the reliability, availability and access efficiency of the data storage, but also is easy to extend.

In some implementations, the cloud desktop data migration method further includes: after migrating the hotspot data, when it is determined that the service node includes the home service node and the roaming service node, clearing data in a local storage unit corresponding to the roaming service node.

Data in the local storage unit corresponding to the roaming service node is cleared to avoid excessive useless data stored in the local storage unit corresponding to the roaming service node, and improve the use efficiency of the local storage unit corresponding to the roaming service node.

It should be noted that the local storage unit corresponding to the roaming service node has limited storage space, and by clearing data in the local storage unit corresponding to the roaming service node, it can be ensured that more cache space is obtained for the timely updated data, thereby avoiding loss of the updated data and improving the accuracy of the data.

In some implementations, clearing data in the local storage unit corresponding to the roaming service node includes: determining a cache proportion according to the acquired capacity of a cache space in the local storage unit corresponding to the roaming service node and a cached data volume; determining, according to the cache proportion and a preset clearing threshold, whether to clear data in the cache space of the local storage unit corresponding to the roaming service node; and when it is determined to clear data in the cache space of the local storage unit corresponding to the roaming service node, clearing the data in the cache space of the local storage unit corresponding to the roaming service node according to access popularity and a preset popularity threshold of the data in the cache space of the local storage unit corresponding to the roaming service node.

The cache proportion may represent whether the cache space of the local storage unit corresponding to the roaming service node is in a saturated state, so as to avoid the case that there is no cache space available for the updated data, and the cache proportion is compared with a preset clearing threshold to determine whether to clear data in the cache space of the local storage unit corresponding to the roaming service node, and when it is determined to clear data in the cache space of the local storage unit corresponding to the roaming service node, data in the cache space of the local storage unit corresponding to the roaming service node is cleared to save storage resources.

It should be noted that in the process of clearing data in the cache space of the local storage unit corresponding to the roaming service node, the data in the cache space of the local storage unit corresponding to the roaming service node may be further ranked according to access popularity of the data in the cache space of the local storage unit corresponding to the roaming service node, to obtain data with a lower access popularity; and then, the data with a lower access popularity is screened through a preset popularity threshold, thereby clearing useless data with a lower access popularity.

For example, the cache space capacity is 500MB, the cache space clearing threshold is 90%, and the cached data volume is 480MB, which accounts for 96% of the cache space capacity and exceeds the cache space clearing threshold 90%, therefore, according to the ranking of the data in the cache space based on the popularity value, 30MB of the data with lower popularity values is cleared to save storage resources.

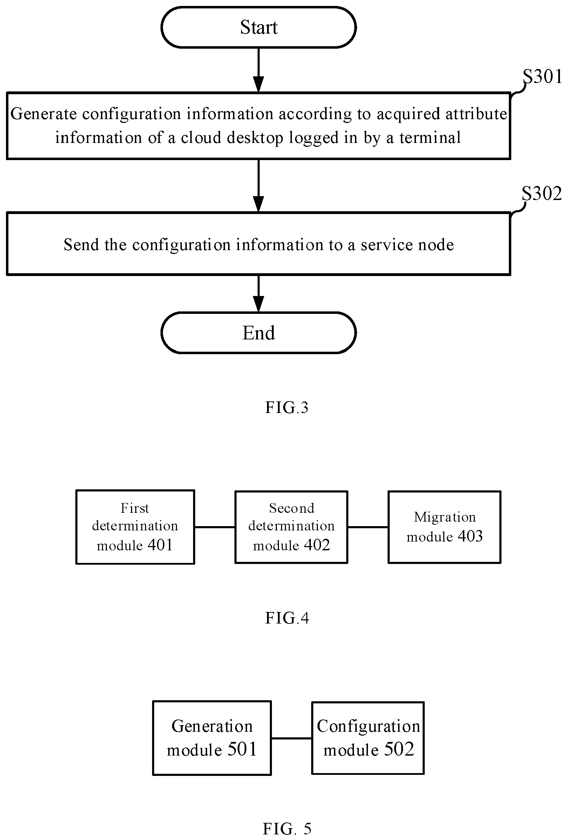

A second aspect of the present application provides a cloud desktop data migration method. FIG. 3 shows a schematic flowchart of a cloud desktop data migration method according to an embodiment of the present application. The cloud desktop data migration method may be applied to a management node which may be arranged in a server. As shown in FIG. 3, the cloud desktop data migration method according to the embodiment of the present application may include the following operations S301 to S302.

At operation S301, generating configuration information according to acquired attribute information of a cloud desktop logged in by a terminal.

In some implementations, the configuration information includes: any one or more of a desktop roaming identifier, a storage address, a migrated volume of the user data, a cache identifier, a capacity of a cache space of a service node, a clearing period of the cache space of the service node, or a preset clearing threshold. The desktop roaming identifier represents whether a user account logging in the cloud desktop supports data roaming, the cache identifier represents whether to cache the updated user data, and the capacity of the cache space of the service node is larger than or equal to the migrated volume of the user data.

It should be noted that different cloud desktops correspond to different types of configuration information. For example, the configuration information corresponding to a cloud desktop A may include: any one or more of a desktop roaming identifier representing that a user account logging in the cloud desktop A supports data roaming, a cache identifier, a capacity of a cache space of a service node, a clearing period of the cache space of the service node, or a preset clearing threshold. The configuration information corresponding to a cloud desktop B may include: a desktop roaming identifier representing that a user account logging in the cloud desktop B does not support data roaming. The configuration information described above is merely illustrative and may be updated according to the actual application scenario. Other types of configuration information not illustrated herein are also within the protection scope of the present application, and are not described in detail here.

Different types of configuration information can reflect functions of different types of cloud desktops, thereby ensuring better use experience when a user uses the different types of cloud desktops.

At operation S302, sending the configuration information to a service node.

After obtaining the configuration information, the service node will determine, according to the attribute information of the cloud desktop logged in by the terminal, whether to migrate user data, and when it is determined to migrate the user data, determine hotspot data according to access popularity corresponding to the user data, and migrate the hotspot data. Therefore, it is not necessary to migrate all the user data, which can reduce the migrated data volume, avoid high network bandwidth occupation in the process of data migration, and reduce the migration period.

In the cloud desktop data migration method provided in the present application, configuration information is generated according to acquired attribute information of a cloud desktop logged in by a terminal; so that different types of cloud desktops correspond to different types of configuration information, and the configuration information is sent to the service node so that the service node can reasonably plan and manage resources of the cloud desktops according to the different types of configuration information, determine, according to attribute information of a cloud desktop logged in by a terminal, whether to migrate user data, and when it is determined to migrate the user data, determine hotspot data according to access popularity corresponding to the user data, and migrate the hotspot data. Therefore, it is not necessary to migrate all the user data, which can reduce the migrated data volume, avoid high network bandwidth occupation in the process of data migration, and reduce the migration period.

A third aspect of the present application provides a service node. FIG. 4 shows a schematic structural diagram of a service node according to an embodiment of the present application. As shown in FIG. 4, the service node may include a first determination module 401, a second determination module 402, and a migration module 403.

The first determination module 401 is configured to determine, according to attribute information of a cloud desktop logged in by a terminal, whether to migrate user data, where the attribute information of the cloud desktop logged in by the terminal is information determined according to acquired configuration information of a management node. The second determination module 402 is configured to determine, when it is determined to migrate the user data, hotspot data according to access popularity corresponding to the user data. The migration module 403 is configured to migrate the hotspot data.

In the service node provided in the present application, the first determination module 401 determines, according to attribute information of the cloud desktop logged in by a terminal, whether to migrate user data, so as to ensure that the terminal can rapidly acquire the hotspot data; the second determination module 402 determines, when it is determined to migrate the user data, hotspot data according to access popularity corresponding to the user data; and the migration module 403 migrates the hotspot data. Therefore, it is not necessary to migrate all the user data, which can reduce the migrated data volume, avoid high network bandwidth occupation in the process of data migration, and reduce the migration period.

A fourth aspect of the present application provides a management node. FIG. 5 shows a schematic structural diagram of a management node according to an embodiment of the present application. As shown in FIG. 5, the management node may include a generation module 501 and a configuration module 502.

The generation module 501 is configured to generate configuration information according to acquired attribute information of a cloud desktop logged in by a terminal. The configuration module 502 is configured to send the configuration information to a service node so that the service node determines, according to attribute information of the cloud desktop logged in by a terminal, whether to migrate user data, and determines, when it is determined to migrate the user data, hotspot data according to access popularity corresponding to the user data, and migrates the hotspot data.

In the management node provided in the present application, the generation module 501 generates configuration information according to acquired attribute information of a cloud desktop logged in by a terminal, so that different types of cloud desktops correspond to different types of configuration information, and the configuration module 502 sends the configuration information to a service node so that the service node can reasonably plan and manage resources of the cloud desktops according to the different types of configuration information, determines, according to attribute information of the cloud desktop logged in by a terminal, whether to migrate user data, and determines, when it is determined to migrate the user data, hotspot data according to access popularity corresponding to the user data, and migrates the hotspot data. Therefore, it is not necessary to migrate all the user data, which can reduce the migrated data volume, avoid high network bandwidth occupation in the process of data migration, and reduce the migration period.

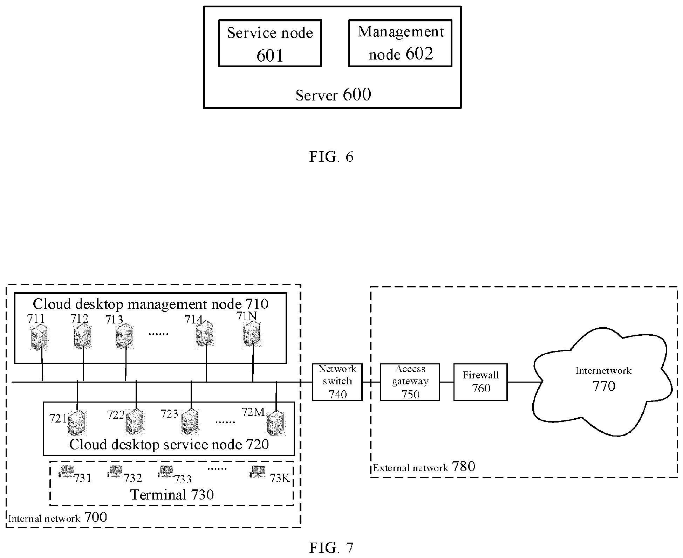

A fifth aspect of the present application provides a server. FIG. 6 shows a schematic structural diagram of a server according to an embodiment of the present application. As shown in FIG. 6, the server 600 may include both a service node 601 and a management node 602.

It should be noted that the server 600 may include only the service node 601; or the server 600 may include only the management node 602.

The service node 601 is configured to implement the cloud desktop data migration method according to the first aspect of the present application. The management node 602 is configured to implement the cloud desktop data migration method according to the second aspect of the present application.

The server 600 provided in the present application may include nodes with different functions. If the server includes only the service node 601, the server 600 may determine, according to attribute information of a cloud desktop logged in by a terminal, whether to migrate user data, so as to ensure that the terminal can rapidly acquire the hotspot data; and when it is determined to migrate the user data, determine hotspot data according to access popularity corresponding to the user data, and migrate the hotspot data. Therefore, it is not necessary to migrate all the user data, which can reduce the migrated data volume, avoid high network bandwidth occupation in the process of data migration, and reduce the migration period.

If the server 600 includes only the management node 602, the server 600 may generate configuration information according to acquired attribute information of a cloud desktop logged in by a terminal, so that different types of cloud desktops correspond to different types of configuration information, and send the configuration information to a service node so that the service node can reasonably plan and manage resources of the cloud desktops according to the different types of configuration information.

If the server 600 includes both the service node 601 and the management node 602, the server 600 may implement all functions of the two nodes, which ensures that a user can obtain the hotspot data determined according to the access popularity no matter what type of cloud desktop the user logs in. Therefore, it is not necessary to migrate all the user data, and the data migrated volume is reduced, while the migration period is shortened, and waste of network resources is avoided.

A sixth aspect of the present application provides a data migration system. FIG. 7 shows schematic network connection between devices in a data migration system according to an embodiment of the present application. As shown in FIG. 7, the data migration system includes an internal network 700, a network switch 740, and an external network 780.

The internal network 700 includes a cloud desktop management node 710, a cloud desktop service node 720, and a terminal 730. The cloud desktop management node 710 includes a plurality of service servers, for example, a service server 711, a service server 712, a service server 713, ..., a service server 71N, and the like, where N is an integer greater than or equal to 1. The cloud desktop service node 720 includes a plurality of management servers, for example, a management server 721, a management server 722, a management server 723, ..., a management server 71M, and the like, where M is an integer greater than or equal to 1. The terminal 730 includes a plurality of terminals, for example, a terminal 731, a terminal 732, a terminal 733, ..., a terminal 73K, and the like, where K is an integer greater than or equal to 1. The external network 780 includes an access gateway 750, a firewall 760, and an internetwork 770.

A user may access different cloud desktops through the respective terminals, and then accesses an intranet or extranet device through the cloud desktops. If a company establishes a plurality of branches at different places which perform mutual information interaction, data center nodes may be established at the places of the branches, where each data center node is an internal network 700, thereby implementing intranet interconnection among multiple data center nodes across regions or cities.

Network devices such as the network switch 740, the access gateway 750, and the firewall 760 are connected to other data center nodes through the internetwork 770, to implement network connection among multiple data center nodes.

Through the internal network interconnection among the data center nodes, each data center node can provide cloud desktop resources and cloud computing services for a user to satisfy the requirement of accessing a nearby cloud desktop by the user. Therefore, the cloud desktop resources of the multiple data center nodes can be uniformly managed and scheduled, the access efficiency of the user is increased, and the cost of renting bandwidth by enterprises is reduced.

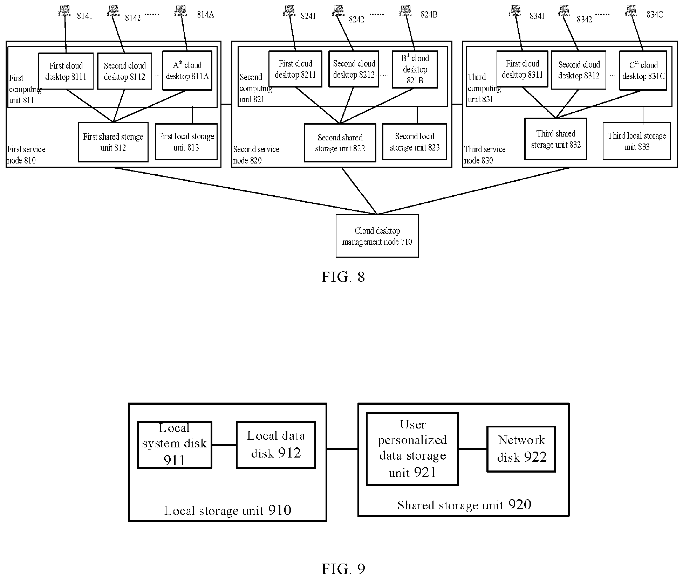

FIG. 8 shows a schematic structural diagram of modules in a data migration system according to an embodiment of the present application. As shown in FIG. 8, the data migration system includes a cloud desktop management node 710, a plurality of terminals, and a plurality of service nodes (e.g., a first service node 810, a second service node 820, a third service node 830, etc.). The data migration system may include a plurality of service nodes, but FIG. 8 merely illustrates 3 service nodes by way of example, and the cloud desktop management node 710 may manage more service nodes according to the processing performance of the cloud desktop management node 710.

The cloud desktop management node 710 is configured to perform unified management on the cloud desktop service nodes, and may have the functions of: resource management, user management, terminal management, system management, authentication management, roaming management, and the like.

The resource management function is used for managing any one or more resources of a data center, a resource pool, computing resources, storage resources, network resources or cloud desktop resources. The user management function is used for managing user information, for example, adding, modifying, deleting, inquiring a registered user account of the cloud desktop, and the like; or further for confirming whether a certain registered user account supports roaming of personalized data, confirming whether the registered user account supports access to a network disk, and the like. The terminal management function is used for maintaining terminal information, for example, binding a certain terminal with a registered user account, or upgrading a certain registered user account, and the like. The system management function is used for managing system configuration information, authority of a registered user account, log files, monitoring alarm information, system performance statistical information, and the like. The authentication management function is used for authenticating a user account accessing the cloud desktop, for example, authenticating a user account locally, authenticating a user account by a third party device, authenticating a user account uniformly by multiple party devices, and the like. The roaming management function is used for counting access popularity of the user data, managing configuration information corresponding to the second type cloud desktop, and the like. A service node where the second type cloud desktop is logged in is a roaming service node, which is located at a different geographical location from a home service node.

For example, configuration information of cloud desktop management node 710 may include: any one or more of a desktop roaming identifier, a storage address, a migrated volume of the user data, a cache identifier, a capacity of a cache space of a service node, a clearing period of the cache space of the service node, or a preset clearing threshold.

The desktop roaming identifier represents whether a user account logging in the cloud desktop supports data roaming (for example, whether supports roaming of user personalized data stored in a system disk, whether supports accessing data stored in a network disk, or the like), and the cache identifier represents whether to cache the updated user data, and the capacity of the cache space of the service node is larger than or equal to the migrated volume of the user data. The migration of the user data may include migrating the user data by automatically downloading hotspot data from a storage unit, and the cloud desktop management node 710 may further set a volume of the automatically downloaded data. The preset clearing threshold may be a time threshold (for example, data in the cache space is cleared every 1 hour, 10 hours, 12 hours, or 24 hours, etc.), or may be determined based on a storage capacity threshold (e.g., in the form of a percentage) (for example, the cache space is cleared when data stored in the cache space occupies more than 80% of the capacity of the cache space).

Each service node includes a computing unit, a shared storage unit, and a local storage unit. For example, the first service node 810 includes: a first computing unit 811, a first shared storage unit 812, and a first local storage unit 813. The first computing unit 811 includes: a first cloud desktop 8111, a second cloud desktop 8112, ..., and an $A^{th}$ cloud desktop 811A, where A is an integer greater than or equal to 1. The second service node 820 includes: a second computing unit 821, a second shared storage unit 822, and a second local storage unit 823. The second computing unit 821 includes: a first cloud desktop 8211, a second cloud desktop 8212, ..., and a $B^{th}$ cloud desktop 821B, where B is an integer greater than or equal to 1. The third service node 830 includes: a third computing unit 831, a third shared storage unit 832, and a third local storage unit 833. The third computing unit 831 includes: a first cloud desktop 8311, a second cloud desktop 8312, ..., and a $C^{th}$ cloud desktop 831C, where C is an integer greater than or equal to 1. Each cloud desktop in FIG. 8 is a cloud desktop virtual machine, and may provide cloud desktop services for different terminals.

For example, the first computing unit 811 is configured to record access time and accessed byte sizes of user data in the first cloud desktop 8111, the second cloud desktop 8112, ..., and the $A^{th}$ cloud desktop 811A, generate a record file corresponding to each cloud desktop, and report the record file to the cloud desktop management node 710.

Each cloud desktop can access the shared storage unit in the corresponding service node, but has its own local storage unit 813. For example, each of the first cloud desktop 8111, the second cloud desktop 8112, ..., and the $A^{th}$ cloud desktop 811A can access the first shared storage unit 812, and a partial local storage area is allocated in the first local storage unit 813 for each of the first cloud desktop 8111, the second cloud desktop 8112, ..., and the $A^{th}$ cloud desktop 811A, so that each cloud desktop can locally cache user data.

Each service node provides cloud desktop services for a plurality of corresponding terminals. For example, the first service node 810 provides cloud desktop services for the terminal 8141, the terminal 8142, ..., the terminal 814A, and the like; the second service node 820 provides cloud desktop services for the terminal 8241, the terminal 8242, ..., the terminal 824B, and the like; and the third service node 830 provides cloud desktop services for the terminal 8341, the terminal 8342, ..., the terminal 834C, and the like. Types of terminals may include: any one or more of a customized small cloud terminal, a personal computer (PC), a laptop, a smart phone, or a tablet computer (Pad).

FIG. 9 shows a schematic structural diagram of a storage unit according to an embodiment of the present application. As shown in FIG. 9, the storage unit includes a local storage unit 910 and a shared storage unit 920.

The local storage unit 910 includes a local system disk 911 and a local data disk 912. The shared storage unit 920 includes: a user personalized data storage unit 921, and a network disk 922. The user personalized data storage unit 921 may be configured to store user specific data, such as my documents, favorites, my downloads, desktop profiles, and the like.

Through configuration and management by the cloud desktop management node 710, storage resources of the local storage unit 910 are allocated to the respective cloud desktops for use, so that each cloud desktop has an exclusive share of the storage space in the local storage unit 910. The local storage unit 910 includes: any one or more of a redundant array of independent disks (RAID), a distributed file storage server or a hard disk.

After a user logs in any cloud desktop by a terminal, the user data in the user personalized data storage unit 921 in the shared storage unit 920 can be provided to the user by means of an automatic mounting storage unit in the cloud desktop, so that the user can perform a data read/write operation. For example, the first computing unit 811 stores system data in the local system disk 911 of the cloud desktop, and stores local data of the user in the local data disk 912. The user personalized data is then stored in the user personalized data storage unit 921, and shared network data that can be accessed by other users is stored in the network disk 922. The shared storage unit 920 may include: any one or more of a network attached storage (NAS) device, a distributed file storage server, or a cloud disk. The shared storage unit 920 is directly connected to the respective cloud desktops, to increase an access speed of each cloud desktop to the shared storage unit 920.

It should be noted that the NAS device is a dedicated data storage server which takes data as a center, completely separates the storage device from the server, and performs centralized management on the data, thereby reducing the dependence on network bandwidth and improving the storage performance, while reducing the maintenance cost.

**In** some implementations, the data migration system shown in FIG. 8 may include the following three application scenarios.

1) A first type cloud desktop application scenario in which: a registered user logs in the first cloud desktop 8111 by the terminal 8141, to obtain user data corresponding to the first cloud desktop 8111. A service node of the home location corresponding to a user account logging in the first type cloud desktop is a home service node.

The first cloud desktop 8111 may store the user data corresponding to the registered user in storage space corresponding to the terminal 8141 in the first local storage unit 813, or in the first shared storage unit 812, where in the first shared storage unit 812, each cloud desktop in the first computing unit 811 has an exclusive shared storage directory corresponding to the registered user.

For example, a first type cloud desktop for a first registered user UserA is the first cloud desktop 8111, and the first registered user UserA may log in the first cloud desktop 8111 by the terminal 8141. It should be noted that the first registered user UserA may be bond or not bond to the terminal 8141. The first shared storage unit 812 includes a shared storage directory corresponding to the first registered user UserA, and the first registered user UserA can access user data in the shared storage directory corresponding to UserA in the first shared storage unit 812 by logging in different cloud desktops to, for example, perform a read/write operation on the user data.

2) A shared cloud desktop application scenario in which: the attribute information of the cloud desktop logged in by the first registered user UserA is a shared cloud desktop, i.e., a desktop that can be logged in by any registered user, and in the case of determining that the first registered user UserA has logged out of the shared cloud desktop, the first computing unit 811 may recycle resources of the shared cloud desktop so that the shared cloud desktop can provide cloud services for other registered users.

For example, when the first registered user UserA logs in the second cloud desktop 8112 by the terminal 8142, the second cloud desktop 8112 will automatically mount user data in the shared storage directory corresponding to the first registered user UserA in the first shared storage unit 812, so that the first registered user UserA can further use the user data stored last time.

3) A second type cloud desktop application scenario in which: when the first registered user UserA logs in the first cloud desktop 8211 in the second service node 820 due to work needs, but the second service node 820 and the first service node 810 are not located in the same geographical location (for example, the second service node 820 is in Shanghai, while the first service node 810 is in Beijing, or the like), the first cloud desktop 8211 in the second service node 820 can still mount the user data in the shared storage directory corresponding to the first registered user UserA in the shared storage unit 812 of the first service node 810 according to the desktop roaming identifier of the first registered user UserA and attribute information (i.e., second type cloud desktop) of the cloud desktop logged in by the first registered user UserA, so as to ensure that the first registered user can access the stored user data smoothly.

A service node where the second type cloud desktop is logged in is a roaming service node, which is located at a different geographical location from a home service node.

The attribute information of different cloud desktops enables a user to access the user data stored in the shared storage unit corresponding to the home location smoothly, thereby bringing about high-quality use experience to the user.

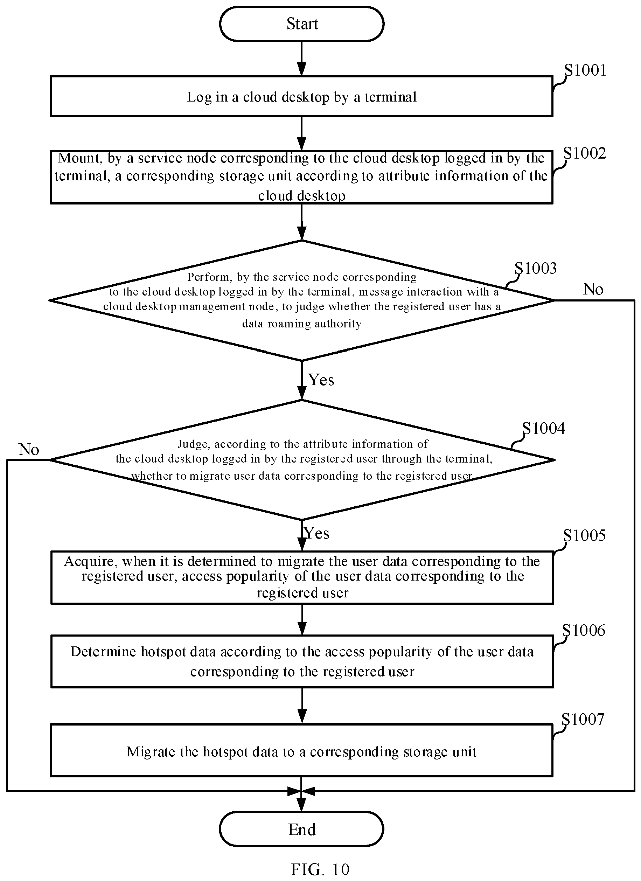

The following describes in detail a hotspot data processing method at each service node with reference to the accompanying drawings. FIG. 10 is a schematic flowchart of a method for migrating hotspot data by a service node according to an embodiment of the present application. As shown in FIG. 10, the method includes the following operations S1001 to S1007.

At operation S1001, logging in a cloud desktop by a terminal.

The cloud desktop may be a second type cloud desktop or a shared cloud desktop. The second type cloud desktop and the shared cloud desktop are both cloud desktops of service nodes located at different geographical locations from the home service node of the terminal. For example, if the first service node 810 is in Beijing while the second service node 820 is in Shanghai, the cloud desktop corresponds to the second type cloud desktop; and if the first service node 810 is in Haidian district of Beijing while the second service node 820 is in Dongcheng district of Beijing, the cloud desktop corresponds to the shared cloud desktop.

For example, if a registered user is bound to the terminal 8141 in the first service node 810, the first type cloud desktop of the registered user is the first cloud desktop 8111 corresponding to the terminal 8141. The first service node 810 and the second service node 820 are two service nodes respectively located at different geographical locations, and the service node corresponding to the home location of the terminal 8141 is the first service node 810. If the registered user logs in the second cloud desktop 8112 in the first service node 810 by the terminal 8142, the second cloud desktop 8112 is referred to as a shared cloud desktop of the registered user; and if the registered user logs in the second cloud desktop 8212 in the second service node 820 by the terminal 8242, the second cloud desktop 8212 is referred to as a second type cloud desktop of the registered user.

At operation S1002, mounting, by a service node corresponding to the cloud desktop logged in by the terminal, a corresponding storage unit according to attribute information of the cloud desktop.

For example, if the registered user logs in the second cloud desktop 8112 in the first service node 810 by the terminal 8142, the first computing unit 811 corresponding to the second cloud desktop 8112 will mount a storage unit corresponding to the registered user. For example, if the service node corresponding to the home location of the terminal 8141 bound by the registered user is the first service node 810, the first computing unit 811 will mount a shared storage address corresponding to the registered user in the first shared storage unit 812.

At operation S1003, performing, by the service node corresponding to the cloud desktop logged in by the terminal, message interaction with a cloud desktop management node, to judge whether the registered user has a data roaming authority.

For example, if the registered user logs in the second cloud desktop 8112 in the first service node 810 by the terminal 8142, the first computing unit 811 corresponding to the second cloud desktop 8112 performs message interaction with the cloud desktop management node 710, to judge whether the registered user has a data roaming authority.

In the case of determining that the registered user has the data roaming authority, operation S1004 is performed; otherwise, the flow is ended.

At operation S1004, judging, according to the attribute information of the cloud desktop logged in by the registered user through the terminal, whether to migrate user data corresponding to the registered user.

It should be noted that if the type of the cloud desktop in the attribute information of the cloud desktop logged in by the terminal is determined to be the shared cloud desktop or the second type cloud desktop, the user data corresponding to the registered user is desired to be migrated, and operation S1005 is performed; otherwise, if the type of the cloud desktop in the attribute information of the cloud desktop logged in by the terminal is determined to be the first type cloud desktop bound with the registered user, the user data corresponding to the registered user is not to be migrated, so that the registered user simply acquires the user data corresponding to the registered user from the corresponding local storage unit, and then the flow is ended.

At operation S1005, acquiring, when it is determined to migrate the user data corresponding to the registered user, access popularity of the user data corresponding to the registered user.

The user data includes: a plurality of files to be processed. The access popularity of the user data may be determined by:

acquiring access information corresponding to each file to be processed, where the access information corresponding to each file to be processed includes: any one or more of a data type of the file to be processed, time information of the file to be processed, access path information of the file to be processed, or a data volume of the file to be processed; and

determining, according to the access information corresponding to each file to be processed, a popularity value of each file to be processed. For example, the method may include: acquiring current time; determining a time weight according to the historical access time of the file to be processed and the current time; and determining a popularity value of the file to be processed according to the time weight and the data volume of the file to be processed.

It should be noted that if a certain file to be processed is accessed m times within n days, where n and m are both integers greater than or equal to 1, the number of bytes of the file to be processed accessed each time and a time weight Wx may be multiplied, and multiplication results of the m times may be accumulated to obtain a popularity value of the file to be processed. For example, the popularity value k of the file to be processed may be calculated by equation (1):

$$k = \sum_{1}^{m} \left( Mi * Wx \right) \qquad (1)$$

where Mi represents the number of bytes of the file to be processed accessed at an $i^{th}$ time, i is an integer greater than or equal to 1 and less than or equal to m, Wx represents the time weight, and x represents a difference between the historical access time of the file to be processed and the current time, which is in a range of 0 to (n-1), where n is an integer greater than 1, and m is an integer greater than or equal to 1. The time weight Wx may be set according to the actual situation.

In some implementations, a weight of the data type corresponding to the file to be processed may also be determined according to a data type of the file to be processed; and a popularity value of the file to be processed may be determined according to the weight of the data type, the data volume of the file to be processed, a time weight in the time information of the file to be processed, and a path weight in the access path information of the file to be processed.

For example, the popularity value k of the file to be processed may be calculated by equation (2):

$$k = \sum_{1}^{num} \left( W\_Type\_x * W\_Time\_y * W\_Path\_z * W\_Size\_i \right) \quad (2)$$

where W_Type_x represents a weight of a data type, W_Time_y represents a time weight, W_Path_z represents a path weight of an access path; W_Size_i represents a data volume of the file to be processed, and num represents that the file is accessed num times within n days, where n is an integer greater than or equal to 1.

For example, weights of m data types are set, and each data type may have a weight represented as W_Type_x, where x is an integer greater than or equal to 1 and less than or equal to m, and m is an integer greater than or equal to 1. For example, W_Type_0 is set to be a weight of a default data type, e.g., W_Type_0 is set to 0.1; W_Type_1 is set to represent a weight of the data type of text file, where for example, for any one or more of text file types such as word, excel, ppt, pdf, txt and the like, W_Type_1 is set to 1; W_Type_2 is set to represent a weight of the data type of email, where for example, W_Type_2 may be set to 1; W_Type_3 is set to represent a weight of an image or picture file, where for example, W_Type_3 may be set to 0.8; and W_Type_4 is set to represent a weight of a video file, where for example, W_Type_4 may be set to 0.5.

The weights of different data types can reflect importance degrees of the data types, so that important files can be preferentially accessed, and the access efficiency of data is improved.

For example, the access popularity of each file to be processed in the last n days is counted, where n is an integer greater than or equal to 1. Let y be a difference (e.g., number of days) between the historical access time and the current time, and the time weight is W_Time_y, where y is an integer greater than or equal to 0 and less than or equal to n-1. For example, assuming that n is equal to 7, when the difference between the historical access time and the current time is 0 (i.e., when y is 0), the file to be processed has a maximum time weight W_Time_0, i.e., 1; when the difference between the historical access time and the current time is 1 (i.e., when y is 1), the file to be processed has a time weight W_Time_1=6/7; and when the difference between the historical access time and the current time is y, the file to be processed has a time weight W_Time_y=(7-y)/7.

The above unit of n or y is merely illustrative, and for example, the access popularity of each file to be processed in the last n hours may be counted when needed, in which case y may be the number of hours.

The time weight can reflect the frequency of data access, so that data more frequently accessed can be obtained.

For example, the path weight may be set as follows: for example, path weights of z access paths are set to W_Path_z, respectively, where z is an integer greater than or equal to 1. For example, if an access path 1 is a path corresponding to a system file (e.g., the access path C:/windows, or the like), a path weight W_Path_1 of the access path 1 may be set to 0; and if an access path 2 is not a system file (e.g., D:/w/zy/er, or the like), a path weight W_Path_2 of the access path 2 may be set to 1.

It should be noted that when the path weight is determined to be 1, it indicates that all files in the access path are counted, and when the path weight is determined to be 0, it indicates that none of the files in the access path are counted. In other words, the system file corresponding to the access path with the path weight 0 should be filtered out, so as to avoid statistical errors caused by too many system files, and improve the accuracy of the file popularity value.

At operation S1006, determining hotspot data according to the access popularity of the user data corresponding to the registered user.

For example, the plurality of files to be processed may be ranked according to the popularity value of each file to be processed calculated in operation S1005, to obtain a ranking result; and the hotspot data is screened from the plurality of files to be processed based on the ranking result.

At operation S1007, migrating the hotspot data to a corresponding storage unit.

According to the access popularity corresponding to the hotspot data, hotspot data with the highest access popularity is preferentially migrated. Then, the migrated hotspot data is provided to a registered user, so that the registered user can process the hotspot data through a terminal.

For example, in a case of determining that the terminal logs in a shared cloud desktop, the hotspot data corresponding to the registered user logged in by the terminal and stored in the shared storage unit may be migrated to a storage address of a local storage unit for the registered user at the home location of the registered user. In a case of determining that the terminal logs in a second type cloud desktop, the hotspot data corresponding to the registered user logged in by the terminal and stored in the shared storage unit corresponding to the home service node is migrated to a storage address of the storage unit corresponding to the roaming service node.

Meanwhile, the access popularity corresponding to the hotspot data is accumulated to update the access information of the hotspot data in time.

In this embodiment, a corresponding storage unit is mounted through the second type cloud desktop or shared cloud desktop logged in by the terminal, and message interaction is performed between a cloud desktop service node and a cloud desktop management node to judge whether the registered user has a data roaming authority. In the case of determining that the registered user has the data roaming authority, it is judged whether to migrate user data corresponding to the registered user according to the attribute information of the cloud desktop logged in by the registered user through the terminal, so as to ensure that the terminal can rapidly acquire the desired user data. When it is determined to migrate the user data, hotspot data is determined according to access popularity corresponding to the user data and migrated to a corresponding storage unit. Therefore, instead of migrating all the user data, only the hotspot data is migrated, which can reduce the migrated data volume, avoid high network bandwidth occupation in the process of data migration, and reduce the migration period.

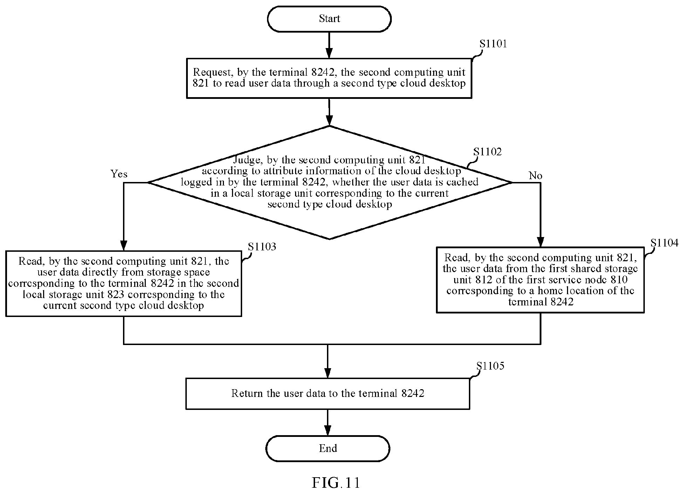

FIG. 11 is a schematic flowchart of a method for reading user data by a terminal through a second type cloud desktop according to an embodiment of the present application. As shown in FIG. 11, The method includes the following operations S1101 to S1105.

At operation S1101, requesting, by the terminal 8242, the second computing unit 821 to read user data through a second type cloud desktop.

The user data includes multiple pieces of hotspot data with different degrees of access popularity, and the terminal 8242 may request the second computing unit 821 to read the hotspot data in the user data through a second type cloud desktop to increase a reading speed of the user data.

At operation S1102, judging, by the second computing unit 821 according to attribute information (i.e., second type cloud desktop) of the cloud desktop logged in by the terminal 8242, whether the user data is cached in a local storage unit corresponding to the current second type cloud desktop.

For example, in the case of determining that the user data is cached in the second local storage unit 823 corresponding to the current second type cloud desktop, operation S1103 is performed; otherwise, in the case of determining that the user data is not cached in the second local storage unit 823 corresponding to the current second type cloud desktop, operation S1104 is performed.

At operation S1103, reading, by the second computing unit 821, the user data directly from storage space corresponding to the terminal 8242 in the second local storage unit 823 corresponding to the current second type cloud desktop.

At operation S1104, reading, by the second computing unit 821, the user data from the first shared storage unit 812 of the first service node 810 corresponding to a home location of the terminal 8242.

At operation S1105, returning the user data to the terminal 8242.

In this embodiment, the cloud desktop service node judges, based on the fact that the terminal logs in a second type cloud desktop, whether the user data is cached in the local storage unit corresponding to the current second type cloud desktop, and reads the user data from different storage units according to the judgment result, so that the terminal can rapidly obtain the user data, and the user experience can be improved.

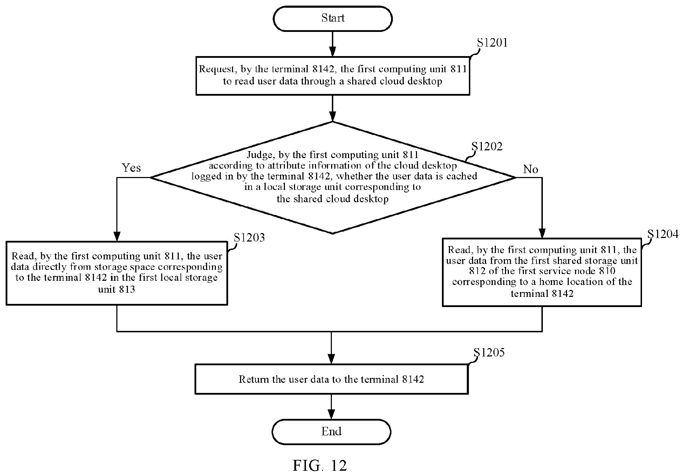

FIG. 12 is a schematic flowchart of a method for reading user data by a terminal through a shared cloud desktop according to an embodiment of the present application. As shown in FIG. 12, the method includes the following operations S1201 to S1205.

At operation S1201, requesting, by the terminal 8142, the first computing unit 811 to read user data through a shared cloud desktop.

The user data includes a plurality of files to be processed, and the plurality of files to be processed may be ranked according to the access popularity of each file to be processed, so as to obtain hotspot data with higher access popularity.

The terminal 8142 may request the first computing unit 81 1 to read part of the hotspot data in the user data through the shared cloud desktop, so as to increase a reading speed of the user data.

At operation S1202, judging, by the first computing unit 811 according to attribute information (i.e., shared cloud desktop) of the cloud desktop logged in by the terminal 8142, whether the user data is cached in a local storage unit corresponding to the shared cloud desktop.

For example, in the case of determining that the user data is cached in the first local storage unit 813 corresponding to the shared cloud desktop, operation S1203 is performed; otherwise, in the case of determining that the user data is not cached in the first local storage unit 813, operation S1204 is performed.

At operation S1203, reading, by the first computing unit 811, the user data directly from storage space corresponding to the terminal 8142 in the first local storage unit 813.

At operation S1204, reading, by the first computing unit 811, the user data from the first shared storage unit 812 of the first service node 810 corresponding to a home location of the terminal 8142.

At operation S1205, returning the user data to the terminal 8142.

In this embodiment, the cloud desktop service node judges, based on the fact that the terminal logs in a shared cloud desktop, whether the user data is cached in the local storage unit corresponding to the shared cloud desktop, and reads the user data from the first local storage unit or the first shared storage unit of the first service node, so that the terminal can rapidly obtain the user data, and the user experience can be improved.

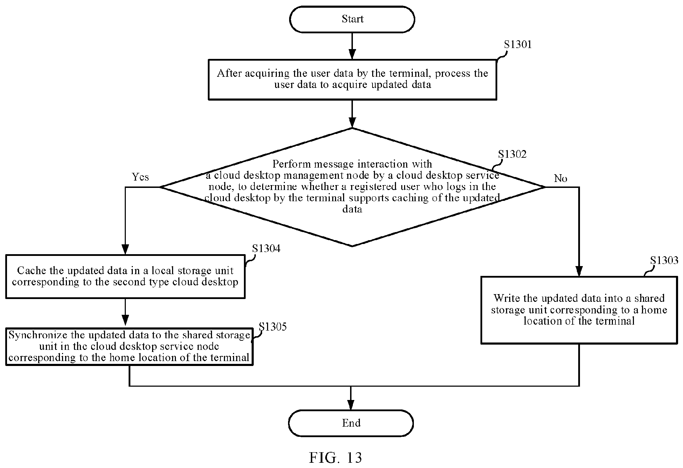

FIG. 13 is a schematic flowchart of a method for writing hotspot data by a terminal through a second type cloud desktop according to an embodiment of the present application. As shown in FIG. 13, the method includes the following operations S1301 to S1303.

At operation S1301, after acquiring the user data by the terminal, processing the user data to acquire updated data.

At operation S1302, performing message interaction with a cloud desktop management node by a cloud desktop service node, to determine whether a registered user who logs in the cloud desktop by the terminal supports caching of the updated data.

For example, the cloud desktop service node determines whether to cache the updated data according to a cache identifier sent from the cloud desktop management node. The cache identifier represents whether to cache the updated user data.

**In** the case of determining that the registered user who logs in the cloud desktop by the terminal does not support caching of the updated data, operation S1303 is performed, and the flow is ended; and in the case of determining that the registered user who logs in the cloud desktop by the terminal supports caching of the updated data, operation S1304 is performed.

At operation S1303, writing the updated data into a shared storage unit corresponding to a home location of the terminal.

For example, the updated data is written into the first shared storage unit 812 of the first service node 810 corresponding to the home location of the terminal 8242.

At operation S1304, caching the updated data in a local storage unit in the service node corresponding to the second type cloud desktop.

For example, if the terminal 8242 logs in a second type cloud desktop (e.g., the second cloud desktop 8212 in the second service node 820), the updated data of the terminal 8242 is cached in storage space corresponding to the terminal 8242 in the second local storage unit 823. Then, access popularity corresponding to the updated data is accumulated according to access information corresponding to the updated data; and the updated data and the corresponding access popularity are cached in storage space corresponding to the terminal 8242 in the second local storage unit 823.

The access popularity may be determined according to any one or more of historical access time of the updated data, an access frequency of the updated data within a preset time period, a data type of the updated data, or a data volume of the updated data.

At operation S1305, synchronizing the updated data to the shared storage unit in the cloud desktop service node corresponding to the home location of the terminal.

The synchronization of the updated data may be implemented by an asynchronous synchronization operation in a processing queue mode, so as to increase the processing efficiency of the data.

In this embodiment, the cloud desktop service node performs interaction with the cloud desktop management node to determine whether a registered user who logs in the cloud desktop by the terminal supports caching of the updated data, and then, the updated data is cached to different storage units according to a determination result for easy use by a registered user, and synchronized to the shared storage unit in the cloud desktop service node corresponding to the home location of the terminal, so that the user data stored in the shared storage unit corresponding to the home service node can be updated in time, and the accuracy of the data is improved.

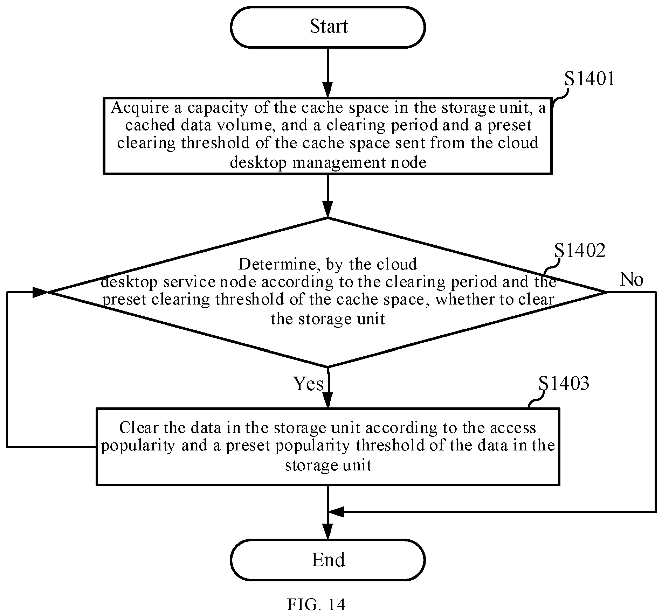

FIG. 14 is a schematic flowchart of a method for clearing a storage unit corresponding to a second type cloud desktop according to an embodiment of the present application. As shown in FIG. 14, the method includes the following operations S1401 to S1403. At operation S1401, acquiring a capacity of the cache space in the storage unit, a cached data volume, and a clearing period and a preset clearing threshold of the cache space sent from the cloud desktop management node.

The storage unit may be a local storage unit corresponding to the second type cloud desktop of the terminal.

For example, if the terminal 8242 logs in a second type cloud desktop (e.g., the second cloud desktop 8212 in the second service node 820), then the storage unit is the storage space corresponding to the terminal 8242 in the second local storage unit 823 corresponding to the second type cloud desktop.

At operation S1402, determining, by the cloud desktop service node according to the clearing period and the preset clearing threshold of the cache space, whether to clear the storage unit.

In some implementations, a cache proportion is determined according to the capacity of the cache space in the storage unit and the cached data volume, and then it is determined, according to the cache proportion and a preset clearing threshold (e.g., 80%), whether to clear data in the cache space of the storage unit. If the cache proportion reaches 80%, it indicates that data in the cache space of the storage unit needs to be cleared; and if the cache proportion is less than 80%, the data in the cache space of the storage unit is not cleared.

In some implementations, whether to clear the data in the cache space of the storage unit may be determined by determining whether the clearing period (e.g., 8 hours) of the cache space is reached based on the time information. If a difference between the current time and the last time for clearing the storage unit exceeds 8 hours, it is determined that the data in the cache space of the storage unit needs to be cleared; otherwise, the data in the cache space of the storage unit is not cleared.

In the case of determining that the data in the cache space of the storage unit needs to be cleared, operation S1403 is performed; otherwise, the flow is ended.

At operation S1403, clearing the data in the storage unit according to the access popularity and a preset popularity threshold of the data in the storage unit.

The data in the storage unit may be ranked according to the access popularity, data with the access popularity less than a preset popularity threshold (e.g., 0.5) and ranked lower is obtained and used as data to be cleared, which is then deleted to save the storage space.

It should be noted that operations S1402 and S1403 may be repeatedly executed until the storage unit satisfies the storage requirement. For example, the clearing of the storage unit may be stopped when the cache proportion drops to 50%.

**In** an implementation, in the case of determining that the registered user has logged out of the second type cloud desktop, the cache data of the registered user in the local storage unit corresponding to the second type cloud desktop is cleared only after determining that the cloud desktop service node has synchronized the updated data of the registered user to the shared storage unit corresponding to the home service node of the terminal to which the registered user is bound, so as to avoid loss of the updated data and ensure safety of the data.

**In** this embodiment, the cloud desktop service node determines whether to clear the storage unit according to the clearing period and the preset clearing threshold of the cache space, to guarantee available storage space in the storage unit; and in the case of determining to clear the data in the storage unit, the data in the storage unit is cleared according to the access popularity and the preset popularity threshold of the data in the storage unit, so as to ensure more cache space for the timely updated data, avoid loss of the updated data, and improve the accuracy of the data.

It should be noted that the present application is not limited to the specific configurations and processing described in the embodiments and shown in the figures. For convenience and simplicity of description, detailed description of a known method is omitted here, and for the specific working processes of the system, the modules and the units described above, reference may be made to corresponding processes described above, which are not repeated here.

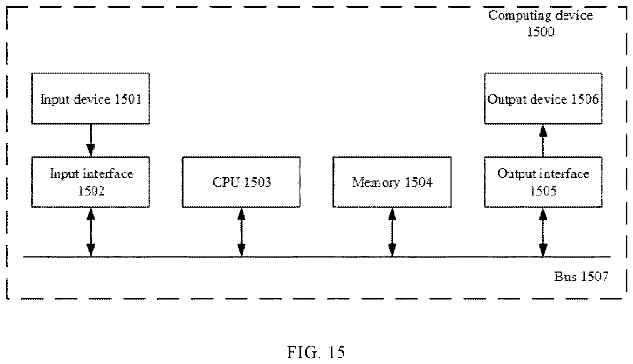

FIG. 15 is a block diagram showing an exemplary hardware architecture of a computing device capable of implementing the cloud desktop data migration method and apparatus according to an embodiment of the present application.

As shown in FIG. 15, the computing device 1500 includes an input device 1501, an input interface 1502, a central processing unit 1503, a memory 1504, an output interface 1505, and an output device 1506. The input interface 1502, the central processing unit 1503, the memory 1504, and the output interface 1505 are connected to each other via a bus 1507, and the input device 1501 and the output device 1506 are connected to the bus 1507 via the input interface 1502 and the output interface 1505, respectively, and further connected to other components of the computing device 1500.

The input device 1501 receives input information from the outside, and transmits the input information to the central processing unit 1503 through the input interface 1502; the central processing unit 1503 processes the input information based on computer-executable instructions stored in the memory 1504 to generate output information, stores the output information temporarily or permanently on the memory 1504, and then transmits the output information to the output device 1506 through the output interface 1505; and the output device 1506 outputs output information outside of the computing device 1500 for use by a user.

In some implementations, the computing device shown in FIG. 15 may be implemented as an electronic device, including: a memory configured to store a computer program; and a processor configured to execute the computer program stored on the memory to implement the cloud desktop data migration method according to any of the above embodiments.

In some implementations, the computing device shown in FIG. 15 may be implemented as a data migration system, including: a memory configured to store a computer program; and a processor configured to execute the computer program stored on the memory to implement the cloud desktop data migration method according to any of the above embodiments.

An embodiment of the present application further provides a computer-readable storage medium having a computer program stored thereon which, when executed by a processor, causes the cloud desktop data migration method according to any of the above embodiments to be implemented.

The above are merely exemplary embodiments of the present application and not intended to limit the scope of the present application. In general, the various embodiments of the present application may be implemented in hardware or special purpose circuits, software, logic or any combination thereof. For example, some aspects may be implemented in hardware, while other aspects may be implemented in firmware or software which may be executed by a controller, a microprocessor or any other computing device, although the present application is not limited thereto.

Embodiments of the present application may be implemented by a data processor of a mobile device executing computer program instructions, for example, in a processor entity, or by hardware, or by a combination of software and hardware. The computer program instructions may be assembler instructions, instruction set architecture (ISA) instructions, machine instructions, machine-related instructions, microcodes, firmware instructions, state setting data, or source or object codes written in any combination of one or more programming languages.

The block diagrams of any logic flow in the figures of the present application may represent program operations, or may represent interconnected logic circuits, modules, and functions, or may represent a combination of program operations and logic circuits, modules, and functions. The computer program may be stored on a memory. The memory may be of any type suitable to the local technical environment and may be implemented in any suitable data storage technology, such as but not limited to, read only memories (ROMs), random access memories (RAMs), optical storage devices or systems (digital versatile discs (DVDs), compact discs (CDs)), etc. The computer-readable medium may include a non-transitory storage medium. The data processor may be of any type suitable to the local technical environment, such as but not limited to, general purpose computers, dedicated computers, microprocessors, digital signal processors (DSPs), application specific integrated circuits (ASICs), field programmable gate arrays (FGPAs), and processors based on multi-core processor architecture.

The foregoing has provided by way of exemplary and non-limiting examples a detailed description of exemplary embodiments of the present application. The scope of the present application is to be determined according to the claims.

**Claims**

1. A cloud desktop data migration method, comprising:

    determining (S101, S201), according to attribute information of a cloud desktop logged in by a terminal, whether to migrate user data specific to a user of the terminal, wherein the attribute information of the cloud desktop logged in by the terminal comprises a positional relationship between the cloud desktop and a home service node to which the cloud desktop belongs, or a desktop roaming identifier, and the user data is determined to be migrated in a case where a distance between the cloud desktop and the home service node exceeds a preset distance threshold, or in a case where the desktop roaming identifier corresponding to the cloud desktop logged in by the terminal represents that a user account logged in the cloud desktop supports data roaming;
    determining (S102), when it is determined to migrate the user data, hotspot data according to access popularity corresponding to the user data; and
    migrating (S103, S206) the hotspot data,
    wherein the user data comprises: a plurality of files to be processed;
    determining (S102), when it is determined to migrate the user data, hotspot data according to access popularity corresponding to the user data comprises:

        acquiring (S202), when it is determined to migrate the user data, access information corresponding to each file to be processed;
        determining (S203), according to the access information corresponding to each file to be processed, a popularity value of each file to be processed;
        ranking (S204) the plurality of files to be processed according to the popularity value of each file to be processed to obtain a ranking result; and
        screening (S205), based on the ranking result, the plurality of files to be processed to obtain the hotspot data.

2. The method according to claim 1, wherein the access information corresponding to each file to be processed comprises: any one or more of a data type of the file to be processed, time information of the file to be processed, access path information of the file to be processed, or a data volume of the file to be processed,

    wherein in a case where the time information of the file to be processed comprises historical access time of the file to be processed, determining (S203), according to the access information corresponding to each file to be processed, the popularity value of each file to be processed comprises: acquiring current time; determining a time weight according to the historical access time of the file to be processed and the current time; and determining a popularity value of the file to be processed according to the time weight and the data volume of the file to be processed,
    or,
    wherein determining (S203), according to the access information corresponding to each file to be processed, the popularity value of each file to be processed comprises: determining, according to the data type of the file to be processed, a weight of the data type corresponding to the file to be processed; and determining a popularity value of the file to be processed according to the weight of the data type, the data volume of the file to be processed, a time weight in the time information of the file to be processed, and a path weight in the access path information of the file to be processed.

3. The method according to claim 1, wherein the cloud desktop data migration method is applied to a service node comprising: the home service node, or the home service node and a roaming service node, wherein the home service node is a service node for a user account at a home location, and the roaming service node is a service node for the user account at a roaming location; and

the cloud desktop data migration method further comprises:
after determining, according to attribute information of the cloud desktop logged in by the terminal, whether to migrate user data, reading the user data in a storage unit corresponding to the service node.

4. The method according to claim 3, wherein the storage unit corresponding to the service node comprises: a shared storage unit corresponding to the home service node, and a local storage unit corresponding to the roaming service node; and reading the user data in the storage unit corresponding to the service node comprises: when it is determined that the user data is stored in the local storage unit corresponding to the roaming service node, reading the user data from the local storage unit corresponding to the roaming service node; and when it is determined that the user data is not stored in the local storage unit corresponding to the roaming service node, reading the user data from the shared storage unit corresponding to the home service node,

or,

wherein migrating (S103, S206) the hotspot data comprises: migrating the hotspot data stored in the storage unit corresponding to the home service node to the storage unit corresponding to the roaming service node.

5. The method of claim 3, further comprising:

   after migrating (S103, S206) the hotspot data, acquiring updated data fed back from the terminal,
   or,
   further comprising: after migrating (S103, S206) the hotspot data, acquiring updated data fed back from the terminal; after acquiring the updated data fed back from the terminal, acquiring a cache identifier sent from a management node; and determining, according to the cache identifier, whether to cache the updated data to the service node.

6. The method according to claim 5, wherein determining, according to the cache identifier, whether to cache the updated data to the service node comprises:

   when it is determined that the cache identifier indicates that the updated data is to be cached to the service node, caching the updated data to a local storage unit corresponding to the roaming service node, and synchronizing the updated data to a shared storage unit corresponding to the home service node; and
   when it is determined that the cache identifier indicates that the updated data is not to be cached to the service node, transmitting the updated data to the shared storage unit corresponding to the home service node.

7. The method according to claim 6, wherein caching the updated data to the local storage unit corresponding to the roaming service node comprises: accumulating access popularity corresponding to the updated data according to access information corresponding to the updated data; and caching the updated data and the corresponding access popularity to the local storage unit corresponding to the roaming service node,

   or,

   wherein the shared storage unit corresponding to the home service node comprises: any one or more of a network attached storage device, a distributed file storage device, or a cloud storage; and the local storage unit corresponding to the roaming service node comprises: any one or more of a redundant array of independent disks, a distributed storage device or a hard disk.

8. The method according to claim 3, further comprising:

   after migrating (S103, S206) the hotspot data and when it is determined that the service node comprises the home service node and the roaming service node, clearing data in a local storage unit corresponding to the roaming service node,
   or,
   further comprising: after migrating (S103, S206) the hotspot data and when it is determined that the service node comprises the home service node and the roaming service node, clearing data in a local storage unit corresponding to the roaming service node, wherein clearing data in the local storage unit corresponding to the roaming service node comprises:

      determining a cache proportion according to an acquired capacity of a cache space in the local storage unit corresponding to the roaming service node and a cached data volume;
      determining, according to the cache proportion and a preset clearing threshold, whether to clear data in the cache space of the local storage unit corresponding to the roaming service node; and

when it is determined to clear data in the cache space of the local storage unit corresponding to the roaming service node, clearing the data in the cache space of the local storage unit corresponding to the roaming service node according to access popularity and a preset popularity threshold of the data in the cache space of the local storage unit corresponding to the roaming service node.

9. A cloud desktop data migration method, comprising:

generating (S301) configuration information according to acquired attribute information of a cloud desktop logged in by a terminal; and
sending (S302) the configuration information to a service node to cause the service node to perform the method of any one of claims 1-8.

10. The method according to claim 9, wherein the configuration information further comprises:

any one or more of a desktop roaming identifier, a storage address, a migrated volume of the user data, a cache identifier, a capacity of a cache space of a service node, a clearing period of the cache space of the service node, or a preset clearing threshold;
wherein the desktop roaming identifier represents whether a user account logging in the cloud desktop supports data roaming, the cache identifier represents whether to cache updated user data, and the capacity of the cache space of the service node is larger than or equal to the migrated volume of the user data.

11. A service node, comprising:

a first determination module (401) configured to determine, according to attribute information of a cloud desktop logged in by a terminal, whether to migrate user data specific to a user of the terminal, wherein the attribute information of the cloud desktop logged in by the terminal comprises a positional relationship between the cloud desktop and a home service node to which the cloud desktop belongs, or a desktop roaming identifier, and the user data is determined to be migrated in a case where a distance between the cloud desktop and the home service node exceeds a preset distance threshold, or in a case where the desktop roaming identifier corresponding to the cloud desktop logged in by the terminal represents that a user account logged in the cloud desktop supports data roaming;
a second determination module (402) configured to determine, when it is determined to migrate the user data, hotspot data according to access popularity corresponding to the user data; and
a migration module (403) configured to migrate the hotspot data,
wherein the user data comprises: a plurality of files to be processed;
determining, when it is determined to migrate the user data, hotspot data according to access popularity corresponding to the user data comprises:

acquiring, when it is determined to migrate the user data, access information corresponding to each file to be processed;
determining, according to the access information corresponding to each file to be processed, a popularity value of each file to be processed;
ranking the plurality of files to be processed according to the popularity value of each file to be processed to obtain a ranking result; and
screening, based on the ranking result, the plurality of files to be processed to obtain the hotspot data.

12. A management node, comprising:

a generation module (501) configured to generate configuration information according to acquired attribute information of a cloud desktop logged in by a terminal; and
a configuration module (502) configured to send the configuration information to a service node to cause the service node to perform the method of any one of claims 1-8.

13. A server (600), comprising:

at least one of a service node (601) or a management node (602); wherein
the service node (601) is configured to implement the cloud desktop data migration method according to any one of claims 1 to 8; and

the management node (602) is configured to implement the cloud desktop data migration method according to any one of claims 9 to 10.

**Patentansprüche**

1. Cloud-Desktop-Datenmigrationsverfahren, umfassend:

   Bestimmen (S101, S201) anhand von Attributinformationen eines von einem Terminal angemeldeten Cloud-Desktops, ob benutzerspezifische Benutzerdaten eines Benutzers des Terminals migriert werden sollen, wobei die Attributinformationen des von dem Terminal angemeldeten Cloud-Desktops eine Positionsbeziehung zwischen dem Cloud-Desktop und einem Heim-Servicenode, zu dem der Cloud-Desktop gehört, oder ein Desktop-Roaming-Kennzeichen umfassen, und die Benutzerdaten in einem Fall zur Migration bestimmt werden, in dem ein Abstand zwischen dem Cloud-Desktop und dem Heim-Servicenode einen voreingestellten Abstandsschwellenwert überschreitet, oder in einem Fall, in dem das dem von dem Terminal angemeldeten Cloud-Desktop entsprechende Desktop-Roaming-Kennzeichen anzeigt, dass ein im Cloud-Desktop angemeldetes Benutzerkonto die Datenroamingfunktion unterstützt;
   Bestimmen (S102), wenn bestimmt ist, die Benutzerdaten zu migrieren, von Hotspot-Daten gemäß einer Zugriffsbeliebtheit, die den Benutzerdaten entspricht; und
   Migrieren (S103, S206) der Hotspot-Daten,
   wobei die Benutzerdaten Folgendes umfassen: eine Vielzahl von zu verarbeitenden Dateien;
   wobei das Bestimmen (S102) der Hotspot-Daten gemäß der Zugriffsbeliebtheit, die den Benutzerdaten entspricht, wenn bestimmt ist, die Benutzerdaten zu migrieren, Folgendes umfasst:

   Erfassen (S202) von Zugriffsinformationen, die jeweils einer zu verarbeitenden Datei entsprechen, wenn bestimmt ist, die Benutzerdaten zu migrieren;
   Bestimmen (S203) eines Beliebtheitswertes jeder zu verarbeitenden Datei gemäß den jeweiligen Zugriffsinformationen jeder zu verarbeitenden Datei;
   Rangieren (S204) der Vielzahl von zu verarbeitenden Dateien gemäß dem Beliebtheitswert jeder zu verarbeitenden Datei, um ein Ranking-Ergebnis zu erhalten; und
   Auswählen (S205) der Vielzahl von zu verarbeitenden Dateien basierend auf dem Ranking-Ergebnis, um die Hotspot-Daten zu erhalten.

2. Verfahren nach Anspruch 1, wobei die jeweiligen Zugriffsinformationen jeder zu verarbeitenden Datei Folgendes umfassen:
   eine oder mehrere der folgenden Angaben: einen Datentyp der zu verarbeitenden Datei, Zeitinformationen der zu verarbeitenden Datei, Zugriffspfadinformationen der zu verarbeitenden Datei oder ein Datenvolumen der zu verarbeitenden Datei,

   wobei in einem Fall, in dem die Zeitinformationen der zu verarbeitenden Datei eine historische Zugriffszeit der zu verarbeitenden Datei umfassen, das Bestimmen (S203) des Beliebtheitswertes jeder zu verarbeitenden Datei gemäß den jeweiligen Zugriffsinformationen jeder zu verarbeitenden Datei Folgendes umfasst: Erfassen einer aktuellen Zeit; Bestimmen eines Zeitgewichts gemäß der historischen Zugriffszeit der zu verarbeitenden Datei und der aktuellen Zeit; und Bestimmen eines Beliebtheitswertes der zu verarbeitenden Datei gemäß dem Zeitgewicht und dem Datenvolumen der zu verarbeitenden Datei,
   oder,
   wobei das Bestimmen (S203) des Beliebtheitswertes jeder zu verarbeitenden Datei gemäß den jeweiligen Zugriffsinformationen jeder zu verarbeitenden Datei Folgendes umfasst: Bestimmen eines Gewichts des Datentyps, der der zu verarbeitenden Datei entspricht, gemäß dem Datentyp der zu verarbeitenden Datei; und Bestimmen eines Beliebtheitswertes der zu verarbeitenden Datei gemäß dem Gewicht des Datentyps, dem Datenvolumen der zu verarbeitenden Datei, einem Zeitgewicht in den Zeitinformationen der zu verarbeitenden Datei und einem Pfadgewicht in den Zugriffspfadinformationen der zu verarbeitenden Datei.

3. Verfahren nach Anspruch 1, wobei das Cloud-Desktop-Datenmigrationsverfahren auf einen Servicenode angewendet wird, der Folgendes umfasst: den Heim-Servicenode oder den Heim-Servicenode und einen Roaming-Servicenode, wobei der Heim-Servicenode ein Servicenode für ein Benutzerkonto an einem Heimstandort ist und der Roaming-Servicenode ein Servicenode für das Benutzerkonto an einem Roaming-Standort ist; und
   wobei das Cloud-Desktop-Datenmigrationsverfahren ferner Folgendes umfasst:

nach dem Bestimmen, anhand von Attributinformationen des von dem Terminal angemeldeten Cloud-Desktops, ob Benutzerdaten migriert werden sollen, Lesen der Benutzerdaten in einer Speichereinheit, die dem Servicenode entspricht.

4. Verfahren nach Anspruch 3, wobei die der Servicenode entsprechenden Speichereinheiten Folgendes umfassen: eine dem Heim-Servicenode entsprechende gemeinsame Speichereinheit und eine dem Roaming-Servicenode entsprechende lokale Speichereinheit; und wobei das Lesen der Benutzerdaten in der der Servicenode entsprechenden Speichereinheit Folgendes umfasst: wenn bestimmt ist, dass die Benutzerdaten in der dem Roaming-Servicenode entsprechenden lokalen Speichereinheit gespeichert sind, Lesen der Benutzerdaten aus der dem Roaming-Servicenode entsprechenden lokalen Speichereinheit; und wenn bestimmt ist, dass die Benutzerdaten nicht in der dem Roaming-Servicenode entsprechenden lokalen Speichereinheit gespeichert sind, Lesen der Benutzerdaten aus der dem Heim-Servicenode entsprechenden gemeinsamen Speichereinheit,
oder,
wobei das Migrieren (S103, S206) der Hotspot-Daten Folgendes umfasst: Migrieren der in der dem Heim-Servicenode entsprechenden Speichereinheit gespeicherten Hotspot-Daten in die dem Roaming-Servicenode entsprechende Speichereinheit.

5. Verfahren nach Anspruch 3, ferner umfassend:

nach dem Migrieren (S103, S206) der Hotspot-Daten Erfassen von vom Terminal rückgemeldeten aktualisierten Daten,
oder,
ferner umfassend: nach dem Migrieren (S103, S206) der Hotspot-Daten Erfassen von vom Terminal rückgemeldeten aktualisierten Daten; nach dem Erfassen der vom Terminal rückgemeldeten aktualisierten Daten Erfassen eines von einem Management-Node gesendeten Cache-Kennzeichens; und Bestimmen, gemäß dem Cache-Kennzeichen, ob die aktualisierten Daten in dem Servicenode zwischengespeichert werden sollen.

6. Verfahren nach Anspruch 5, wobei das Bestimmen, gemäß dem Cache-Kennzeichen, ob die aktualisierten Daten in dem Servicenode zwischengespeichert werden sollen, Folgendes umfasst:

wenn bestimmt ist, dass das Cache-Kennzeichen anzeigt, dass die aktualisierten Daten in dem Servicenode zwischengespeichert werden sollen, Zwischenspeichern der aktualisierten Daten in einer dem Roaming-Servicenode entsprechenden lokalen Speichereinheit und Synchronisieren der aktualisierten Daten mit einer dem Heim-Servicenode entsprechenden gemeinsamen Speichereinheit; und
wenn bestimmt ist, dass das Cache-Kennzeichen anzeigt, dass die aktualisierten Daten nicht in dem Servicenode zwischengespeichert werden sollen, Übertragen der aktualisierten Daten an die dem Heim-Servicenode entsprechende gemeinsame Speichereinheit.

7. Verfahren nach Anspruch 6, wobei das Zwischenspeichern der aktualisierten Daten in der dem Roaming-Servicenode entsprechenden lokalen Speichereinheit Folgendes umfasst: Akkumulieren einer Zugriffsbeliebtheit, die den aktualisierten Daten entspricht, gemäß Zugriffsinformationen, die den aktualisierten Daten entsprechen; und Zwischenspeichern der aktualisierten Daten und der entsprechenden Zugriffsbeliebtheit in der dem Roaming-Servicenode entsprechenden lokalen Speichereinheit,
oder,
wobei die dem Heim-Servicenode entsprechende gemeinsame Speichereinheit Folgendes umfasst: eine oder mehrere der folgenden Speichervorrichtungen: ein netzwerkgebundenes Speichergerät, eine verteilte Dateispeichervorrichtung oder ein Cloud-Speicher; und wobei die dem Roaming-Servicenode entsprechende lokale Speichereinheit Folgendes umfasst: eine oder mehrere der folgenden Speichervorrichtungen: ein Redundant Array of Independent Disks, eine verteilte Speichervorrichtung oder eine Festplatte.

8. Verfahren nach Anspruch 3, ferner umfassend:

nach dem Migrieren (S103, S206) der Hotspot-Daten und wenn bestimmt ist, dass der Servicenode den Heim-Servicenode und den Roaming-Servicenode umfasst, Löschen von Daten in einer dem Roaming-Servicenode entsprechenden lokalen Speichereinheit,
oder,
ferner umfassend: nach dem Migrieren (S103, S206) der Hotspot-Daten und wenn bestimmt ist, dass der Servicenode den Heim-Servicenode und den Roaming-Servicenode umfasst, Löschen von Daten in einer dem Roaming-Servicenode entsprechenden lokalen Speichereinheit, wobei das Löschen von Daten in der dem Roaming-Servicenode entsprechenden lokalen Speichereinheit Folgendes umfasst:

Bestimmen eines Cacheanteils gemäß einer erfassten Kapazität eines Cache-Speicherplatzes in der dem Roaming-Servicenode entsprechenden lokalen Speichereinheit und einem zwischengespeicherten Datenvolumen;

Bestimmen, gemäß dem Cacheanteil und einem voreingestellten Bereinigungsschwellenwert, ob Daten in dem Cache-Speicherplatz der dem Roaming-Servicenode entsprechenden lokalen Speichereinheit gelöscht werden sollen; und

wenn bestimmt ist, dass Daten in dem Cache-Speicherplatz der dem Roaming-Servicenode entsprechenden lokalen Speichereinheit gelöscht werden sollen, Löschen der Daten in dem Cache-Speicherplatz der dem Roaming-Servicenode entsprechenden lokalen Speichereinheit gemäß einer Zugriffsbeliebtheit und einem voreingestellten Beliebtheitsschwellenwert der Daten in dem Cache-Speicherplatz der dem Roaming-Servicenode entsprechenden lokalen Speichereinheit.

9. Cloud-Desktop-Datenmigrationsverfahren, umfassend:

Erzeugen (S301) von Konfigurationsinformationen gemäß erfassten Attributinformationen eines von einem Terminal angemeldeten Cloud-Desktops; und

Senden (S302) der Konfigurationsinformationen an einen Servicenode, um den Servicenode zu veranlassen, das Verfahren nach einem der Ansprüche 1 bis 8 auszuführen.

10. Verfahren nach Anspruch 9, wobei die Konfigurationsinformationen ferner Folgendes umfassen:

eine oder mehrere der folgenden Angaben: ein Desktop-Roaming-Kennzeichen, eine Speicheradresse, ein migriertes Volumen der Benutzerdaten, ein Cache-Kennzeichen, eine Kapazität eines Cache-Speicherplatzes eines Servicenodes, eine Bereinigungsperiode des Cache-Speicherplatzes des Servicenodes oder einen voreingestellten Bereinigungsschwellenwert;

wobei das Desktop-Roaming-Kennzeichen angibt, ob ein den Cloud-Desktop anmeldendes Benutzerkonto die Datenroamingfunktion unterstützt, das Cache-Kennzeichen angibt, ob aktualisierte Benutzerdaten zwischengespeichert werden sollen, und die Kapazität des Cache-Speicherplatzes des Servicenodes größer oder gleich dem migrierten Volumen der Benutzerdaten ist.

11. Servicenode, umfassend:

ein erstes Bestimmungsmodul (401), ausgebildet zum Bestimmen anhand von Attributinformationen eines von einem Terminal angemeldeten Cloud-Desktops, ob benutzerspezifische Benutzerdaten eines Benutzers des Terminals migriert werden sollen, wobei die Attributinformationen des von dem Terminal angemeldeten Cloud-Desktops eine Positionsbeziehung zwischen dem Cloud-Desktop und einem Heim-Servicenode, zu dem der Cloud-Desktop gehört, oder ein Desktop-Roaming-Kennzeichen umfassen, und die Benutzerdaten in einem Fall zur Migration bestimmt werden, in dem ein Abstand zwischen dem Cloud-Desktop und dem Heim-Servicenode einen voreingestellten Abstandsschwellenwert überschreitet, oder in einem Fall, in dem das dem von dem Terminal angemeldeten Cloud-Desktop entsprechende Desktop-Roaming-Kennzeichen anzeigt, dass ein im Cloud-Desktop angemeldetes Benutzerkonto die Datenroamingfunktion unterstützt;

ein zweites Bestimmungsmodul (402), ausgebildet zum Bestimmen von Hotspot-Daten gemäß einer Zugriffsbeliebtheit, die den Benutzerdaten entspricht, wenn bestimmt ist, die Benutzerdaten zu migrieren; und

ein Migrationsmodul (403), ausgebildet zum Migrieren der Hotspot-Daten,

wobei die Benutzerdaten Folgendes umfassen: eine Vielzahl von zu verarbeitenden Dateien;

wobei das Bestimmen der Hotspot-Daten gemäß der Zugriffsbeliebtheit, die den Benutzerdaten entspricht, wenn bestimmt ist, die Benutzerdaten zu migrieren, Folgendes umfasst:

Erfassen von Zugriffsinformationen, die jeweils einer zu verarbeitenden Datei entsprechen, wenn bestimmt ist, die Benutzerdaten zu migrieren;

Bestimmen eines Beliebtheitswertes jeder zu verarbeitenden Datei gemäß den jeweiligen Zugriffsinformationen jeder zu verarbeitenden Datei;

Rangieren der Vielzahl von zu verarbeitenden Dateien gemäß dem Beliebtheitswert jeder zu verarbeitenden Datei, um ein Ranking-Ergebnis zu erhalten; und

Auswählen der Vielzahl von zu verarbeitenden Dateien basierend auf dem Ranking-Ergebnis, um die Hotspot-Daten zu erhalten.

**12.** Management-Node, umfassend:

ein Erzeugungsmodul (501), ausgebildet zum Erzeugen von Konfigurationsinformationen gemäß erfassten Attributinformationen eines von einem Terminal angemeldeten Cloud-Desktops; und
ein Konfigurationsmodul (502), ausgebildet zum Senden der Konfigurationsinformationen an einen Servicenode, um den Servicenode zu veranlassen, das Verfahren nach einem der Ansprüche 1 bis 8 auszuführen.

**13.** Server (600), umfassend:

mindestens einen von einem Servicenode (601) oder einem Management-Node (602); wobei
der Servicenode (601) ausgebildet ist, das Cloud-Desktop-Datenmigrationsverfahren nach einem der Ansprüche 1 bis 8 zu implementieren; und
der Management-Node (602) ausgebildet ist, das Cloud-Desktop-Datenmigrationsverfahren nach einem der Ansprüche 9 bis 10 zu implementieren.

**Revendications**

**1.** Méthode de migration de données de bureau cloud, comprenant :

déterminer (S101, S201), selon des informations d'attribut d'un bureau cloud auquel un terminal est connecté, s'il faut migrer des données utilisateur spécifiques à un utilisateur du terminal, les informations d'attribut du bureau cloud auquel le terminal est connecté comprenant une relation de position entre le bureau cloud et un nœud de service d'origine auquel appartient le bureau cloud, ou un identifiant d'itinérance de bureau, et les données utilisateur étant déterminées devant être migrées dans un cas où une distance entre le bureau cloud et le nœud de service d'origine dépasse un seuil de distance prédéfini, ou dans un cas où l'identifiant d'itinérance de bureau correspondant au bureau cloud auquel le terminal est connecté représente qu'un compte utilisateur connecté au bureau cloud prend en charge l'itinérance de données ;
déterminer (S102), lorsqu'il est déterminé de migrer les données utilisateur, des données hotspot selon une popularité d'accès correspondant aux données utilisateur ; et
migrer (S103, S206) les données hotspot,
les données utilisateur comprenant : une pluralité de fichiers à traiter ;
le fait de déterminer (S102), lorsqu'il est déterminé de migrer les données utilisateur, les données hotspot selon la popularité d'accès correspondant aux données utilisateur comprenant :

acquérir (S202), lorsqu'il est déterminé de migrer les données utilisateur, des informations d'accès correspondant à chaque fichier à traiter ;
déterminer (S203), selon les informations d'accès correspondant à chaque fichier à traiter, une valeur de popularité de chaque fichier à traiter ;
classer (S204) la pluralité de fichiers à traiter selon la valeur de popularité de chaque fichier à traiter afin d'obtenir un résultat de classement ; et
filtrer (S205), sur la base du résultat de classement, la pluralité de fichiers à traiter afin d'obtenir les données hotspot.

**2.** Méthode selon la revendication 1, dans laquelle les informations d'accès correspondant à chaque fichier à traiter comprennent : un ou plusieurs parmi un type de données du fichier à traiter, des informations de temps du fichier à traiter, des informations de chemin d'accès du fichier à traiter, ou un volume de données du fichier à traiter,

dans laquelle, dans un cas où les informations de temps du fichier à traiter comprennent un temps d'accès historique du fichier à traiter, le fait de déterminer (S203), selon les informations d'accès correspondant à chaque fichier à traiter, la valeur de popularité de chaque fichier à traiter comprend : acquérir un temps courant ;
déterminer un poids de temps selon le temps d'accès historique du fichier à traiter et le temps courant ; et
déterminer une valeur de popularité du fichier à traiter selon le poids de temps et le volume de données du fichier à traiter,
ou,
dans laquelle le fait de déterminer (S203), selon les informations d'accès correspondant à chaque fichier à traiter, la valeur de popularité de chaque fichier à traiter comprend : déterminer, selon le type de données du fichier à traiter, un poids du type de données correspondant au fichier à traiter ; et déterminer une valeur de popularité du fichier à traiter selon le poids du type de données, le volume de données du fichier à traiter, un poids de temps dans les informations de temps du fichier à traiter, et un poids de chemin dans les informations de chemin d'accès du fichier à traiter.

**3.** Méthode selon la revendication 1, dans laquelle la méthode de migration de données de bureau cloud est appliquée à un nœud de service comprenant : le nœud de service d'origine, ou le nœud de service d'origine et un nœud de service itinérant, le nœud de service d'origine étant un nœud de service pour un compte utilisateur à un emplacement d'origine, et le nœud de service itinérant étant un nœud de service pour le compte utilisateur à un emplacement itinérant ; et
dans laquelle la méthode de migration de données de bureau cloud comprend en outre :
après la détermination, selon des informations d'attribut du bureau cloud auquel le terminal est connecté, de savoir s'il faut migrer des données utilisateur, lire les données utilisateur dans une unité de stockage correspondant au nœud de service.

**4.** Méthode selon la revendication 3, dans laquelle l'unité de stockage correspondant au nœud de service comprend : une unité de stockage partagée correspondant au nœud de service d'origine, et une unité de stockage locale correspondant au nœud de service itinérant ; et le fait de lire les données utilisateur dans l'unité de stockage correspondant au nœud de service comprend : lorsqu'il est déterminé que les données utilisateur sont stockées dans l'unité de stockage locale correspondant au nœud de service itinérant, lire les données utilisateur à partir de l'unité de stockage locale correspondant au nœud de service itinérant ; et lorsqu'il est déterminé que les données utilisateur ne sont pas stockées dans l'unité de stockage locale correspondant au nœud de service itinérant, lire les données utilisateur à partir de l'unité de stockage partagée correspondant au nœud de service d'origine,
ou,
dans laquelle le fait de migrer (S103, S206) les données hotspot comprend : migrer les données hotspot stockées dans l'unité de stockage correspondant au nœud de service d'origine vers l'unité de stockage correspondant au nœud de service itinérant.

**5.** Méthode selon la revendication 3, comprenant en outre :

après la migration (S103, S206) des données hotspot, acquérir des données mises à jour renvoyées par le terminal,
ou,
comprenant en outre : après la migration (S103, S206) des données hotspot, acquérir des données mises à jour renvoyées par le terminal ; après l'acquisition des données mises à jour renvoyées par le terminal, acquérir un identifiant de cache envoyé par un nœud de gestion ; et déterminer, selon l'identifiant de cache, s'il faut mettre en cache les données mises à jour dans le nœud de service.

**6.** Méthode selon la revendication 5, dans laquelle le fait de déterminer, selon l'identifiant de cache, s'il faut mettre en cache les données mises à jour dans le nœud de service comprend :

lorsqu'il est déterminé que l'identifiant de cache indique que les données mises à jour doivent être mises en cache dans le nœud de service, mettre en cache les données mises à jour dans une unité de stockage locale correspondant au nœud de service itinérant, et synchroniser les données mises à jour vers une unité de stockage partagée correspondant au nœud de service d'origine ; et
lorsqu'il est déterminé que l'identifiant de cache indique que les données mises à jour ne doivent pas être mises en cache dans le nœud de service, transmettre les données mises à jour à l'unité de stockage partagée correspondant au nœud de service d'origine.

**7.** Méthode selon la revendication 6, dans laquelle le fait de mettre en cache les données mises à jour dans l'unité de stockage locale correspondant au nœud de service itinérant comprend : accumuler une popularité d'accès correspondant aux données mises à jour selon des informations d'accès correspondant aux données mises à jour ; et mettre en cache les données mises à jour et la popularité d'accès correspondante dans l'unité de stockage locale correspondant au nœud de service itinérant,
ou,
dans laquelle l'unité de stockage partagée correspondant au nœud de service d'origine comprend : un ou plusieurs parmi un dispositif de stockage raccordé au réseau, un dispositif de stockage de fichiers distribué, ou un stockage en nuage ; et l'unité de stockage locale correspondant au nœud de service itinérant comprend : un ou plusieurs parmi une matrice redondante de disques indépendants, un dispositif de stockage distribué ou un disque dur.

8. Méthode selon la revendication 3, comprenant en outre :

après la migration (S103, S206) des données hotspot et lorsqu'il est déterminé que le nœud de service comprend le nœud de service d'origine et le nœud de service itinérant, effacer des données dans une unité de stockage locale correspondant au nœud de service itinérant,
ou,
comprenant en outre : après la migration (S103, S206) des données hotspot et lorsqu'il est déterminé que le nœud de service comprend le nœud de service d'origine et le nœud de service itinérant, effacer des données dans une unité de stockage locale correspondant au nœud de service itinérant, le fait d'effacer des données dans l'unité de stockage locale correspondant au nœud de service itinérant comprenant :

déterminer une proportion de cache selon une capacité acquise d'un espace de cache dans l'unité de stockage locale correspondant au nœud de service itinérant et un volume de données mises en cache ;
déterminer, selon la proportion de cache et un seuil de vidage prédéfini, s'il faut effacer des données dans l'espace de cache de l'unité de stockage locale correspondant au nœud de service itinérant ; et
lorsqu'il est déterminé qu'il faut effacer des données dans l'espace de cache de l'unité de stockage locale correspondant au nœud de service itinérant, effacer les données dans l'espace de cache de l'unité de stockage locale correspondant au nœud de service itinérant selon une popularité d'accès et un seuil de popularité prédéfini des données dans l'espace de cache de l'unité de stockage locale correspondant au nœud de service itinérant.

9. Méthode de migration de données de bureau cloud, comprenant :

générer (S301) des informations de configuration selon des informations d'attribut acquises d'un bureau cloud auquel un terminal est connecté ; et
envoyer (S302) les informations de configuration à un nœud de service pour amener le nœud de service à exécuter la méthode selon l'une quelconque des revendications 1 à 8.

10. Méthode selon la revendication 9, dans laquelle les informations de configuration comprennent en outre :

un ou plusieurs parmi un identifiant d'itinérance de bureau, une adresse de stockage, un volume migré des données utilisateur, un identifiant de cache, une capacité d'un espace de cache d'un nœud de service, une période de vidage de l'espace de cache du nœud de service, ou un seuil de vidage prédéfini ;
dans laquelle l'identifiant d'itinérance de bureau représente si un compte utilisateur se connectant au bureau cloud prend en charge l'itinérance de données, l'identifiant de cache représente s'il faut mettre en cache des données utilisateur mises à jour, et la capacité de l'espace de cache du nœud de service est supérieure ou égale au volume migré des données utilisateur.

11. Nœud de service, comprenant :

un premier module de détermination (401) configuré pour déterminer, selon des informations d'attribut d'un bureau cloud auquel un terminal est connecté, s'il faut migrer des données utilisateur spécifiques à un utilisateur du terminal, les informations d'attribut du bureau cloud auquel le terminal est connecté comprenant une relation de position entre le bureau cloud et un nœud de service d'origine auquel appartient le bureau cloud, ou un identifiant d'itinérance de bureau, et les données utilisateur étant déterminées devant être migrées dans un cas où une distance entre le bureau cloud et le nœud de service d'origine dépasse un seuil de distance prédéfini, ou dans un cas où l'identifiant d'itinérance de bureau correspondant au bureau cloud auquel le terminal est connecté représente qu'un compte utilisateur connecté au bureau cloud prend en charge l'itinérance de données ;
un second module de détermination (402) configuré pour déterminer, lorsqu'il est déterminé de migrer les données utilisateur, des données hotspot selon une popularité d'accès correspondant aux données utilisateur ; et
un module de migration (403) configuré pour migrer les données hotspot,
les données utilisateur comprenant : une pluralité de fichiers à traiter ;
le fait de déterminer, lorsqu'il est déterminé de migrer les données utilisateur, les données hotspot selon la popularité d'accès correspondant aux données utilisateur comprenant :

acquérir, lorsqu'il est déterminé de migrer les données utilisateur, des informations d'accès correspondant à chaque fichier à traiter ;

déterminer, selon les informations d'accès correspondant à chaque fichier à traiter, une valeur de popularité de chaque fichier à traiter ;

classer la pluralité de fichiers à traiter selon la valeur de popularité de chaque fichier à traiter afin d'obtenir un résultat de classement ; et

filtrer, sur la base du résultat de classement, la pluralité de fichiers à traiter afin d'obtenir les données hotspot.

12. Nœud de gestion, comprenant :

un module de génération (501) configuré pour générer des informations de configuration selon des informations d'attribut acquises d'un bureau cloud auquel un terminal est connecté ; et

un module de configuration (502) configuré pour envoyer les informations de configuration à un nœud de service pour amener le nœud de service à exécuter la méthode selon l'une quelconque des revendications 1 à 8.

13. Serveur (600), comprenant :

au moins l'un d'un nœud de service (601) ou d'un nœud de gestion (602) ; dans lequel

le nœud de service (601) est configuré pour mettre en œuvre la méthode de migration de données de bureau cloud selon l'une quelconque des revendications 1 à 8 ; et

le nœud de gestion (602) est configuré pour mettre en œuvre la méthode de migration de données de bureau cloud selon l'une quelconque des revendications 9 à 10.

Start

Determine, according to attribute information of a cloud desktop logged in by a terminal, whether to migrate user data

S101

Determine, when it is determined to migrate the user data, hotspot data according to access popularity corresponding to the user data

S102

Migrate the hotspot data

S103

End

FIG. 1

```
                    ┌──────────────────────┐
                    │        Start         │
                    └──────────┬───────────┘
                               │
                               ▼                                    S201
┌──────────────────────────────────────────────────────────────────┐
│ Determine, according to attribute information of a cloud desktop   │
│ logged in by a terminal, whether to migrate user data              │
└──────────────────────────────┬─────────────────────────────────────┘
                               │
                               ▼                                    S202
┌──────────────────────────────────────────────────────────────────┐
│ Acquire, when it is determined to migrate the user data, access    │
│ information corresponding to each file to be processed             │
└──────────────────────────────┬─────────────────────────────────────┘
                               │
                               ▼                                    S203
┌──────────────────────────────────────────────────────────────────┐
│ Determine, according to the access information corresponding to    │
│ each file to be processed, a popularity value of each file to be   │
│ processed                                                          │
└──────────────────────────────┬─────────────────────────────────────┘
                               │
                               ▼                                    S204
┌──────────────────────────────────────────────────────────────────┐
│ Rank the plurality of files to be processed according to the       │
│ popularity value of each file to be processed to obtain a ranking  │
│ result                                                             │
└──────────────────────────────┬─────────────────────────────────────┘
                               │
                               ▼                                    S205
┌──────────────────────────────────────────────────────────────────┐
│ Screen, based on the ranking result, the plurality of files to be  │
│ processed to obtain the hotspot data                               │
└──────────────────────────────┬─────────────────────────────────────┘
                               │
                               ▼                                    S206
┌──────────────────────────────────────────────────────────────────┐
│                     Migrate the hotspot data                       │
└──────────────────────────────┬─────────────────────────────────────┘
                               │
                               ▼
                    ┌──────────────────────┐
                    │         End          │
                    └──────────────────────┘
```

FIG.2

FIG.3

FIG.4

FIG. 5

| Service node 601 | Management node 602 |
|---|---|

Server 600

FIG. 6

Cloud desktop management node 710

711  712  713  ......  714  71N

Network switch 740

Access gateway 750

Firewall 760

Internetwork 770

721  722  723  ......  72M

Cloud desktop service node 720

731  732  733  ......  73K

Terminal 730

Internal network 700

External network 780

FIG. 7

FIG. 8

FIG. 9

```
                          ┌─────────────┐
                          │    Start    │
                          └──────┬──────┘
                                 │
                                 ▼
   ┌──────────────────────────────────────────────────────────┐  S1001
   │          Log in a cloud desktop by a terminal             │
   └──────────────────────────────┬───────────────────────────┘
                                  ▼
   ┌──────────────────────────────────────────────────────────┐  S1002
   │ Mount, by a service node corresponding to the cloud       │
   │ desktop logged in by the terminal, a corresponding        │
   │ storage unit according to attribute information of the    │
   │ cloud desktop                                             │
   └──────────────────────────────┬───────────────────────────┘
                                  ▼
```

Perform, by the service node corresponding to the cloud desktop logged in by the terminal, message interaction with a cloud desktop management node, to judge whether the registered user has a data roaming authority — S1003 — No

Yes

Judge, according to the attribute information of the cloud desktop logged in by the registered user through the terminal, whether to migrate user data corresponding to the registered user — S1004 — No

Yes

```
   ┌──────────────────────────────────────────────────────────┐  S1005
   │ Acquire, when it is determined to migrate the user data   │
   │ corresponding to the registered user, access popularity   │
   │ of the user data corresponding to the registered user     │
   └──────────────────────────────┬───────────────────────────┘
                                  ▼
   ┌──────────────────────────────────────────────────────────┐  S1006
   │ Determine hotspot data according to the access            │
   │ popularity of the user data corresponding to the          │
   │ registered user                                           │
   └──────────────────────────────┬───────────────────────────┘
                                  ▼
   ┌──────────────────────────────────────────────────────────┐  S1007
   │   Migrate the hotspot data to a corresponding storage     │
   │   unit                                                    │
   └──────────────────────────────┬───────────────────────────┘
                                  ▼
                          ┌─────────────┐
                          │     End     │
                          └─────────────┘
```

FIG. 10

Start

S1101

Request, by the terminal 8242, the second computing unit 821 to read user data through a second type cloud desktop

S1102

Judge, by the second computing unit 821 according to attribute information of the cloud desktop logged in by the terminal 8242, whether the user data is cached in a local storage unit corresponding to the current second type cloud desktop

Yes

No

S1103

Read, by the second computing unit 821, the user data directly from storage space corresponding to the terminal 8242 in the second local storage unit 823 corresponding to the current second type cloud desktop

S1104

Read, by the second computing unit 821, the user data from the first shared storage unit 812 of the first service node 810 corresponding to a home location of the terminal 8242

S1105

Return the user data to the terminal 8242

End

FIG.11

Start

S1201

Request, by the terminal 8142, the first computing unit 811 to read user data through a shared cloud desktop

S1202

Judge, by the first computing unit 811 according to attribute information of the cloud desktop logged in by the terminal 8142, whether the user data is cached in a local storage unit corresponding to the shared cloud desktop

Yes

No

S1203

Read, by the first computing unit 811, the user data directly from storage space corresponding to the terminal 8142 in the first local storage unit 813

S1204

Read, by the first computing unit 811, the user data from the first shared storage unit 812 of the first service node 810 corresponding to a home location of the terminal 8142

S1205

Return the user data to the terminal 8142

End

FIG. 12

```
                    ┌─────────────┐
                    │    Start    │
                    └──────┬──────┘
                           │              S1301
           ┌───────────────▼───────────────────────┐
           │ After acquiring the user data by the   │
           │ terminal, process the user data to     │
           │ acquire updated data                   │
           └───────────────┬───────────────────────┘
                           │
```

Perform message interaction with a cloud desktop management node by a cloud desktop service node, to determine whether a registered user who logs in the cloud desktop by the terminal supports caching of the updated data — S1302

Yes

No

Cache the updated data in a local storage unit corresponding to the second type cloud desktop — S1304

Synchronize the updated data to the shared storage unit in the cloud desktop service node corresponding to the home location of the terminal — S1305

Write the updated data into a shared storage unit corresponding to a home location of the terminal — S1303

End

FIG. 13

Start

Acquire a capacity of the cache space in the storage unit, a
cached data volume, and a clearing period and a preset
clearing threshold of the cache space sent from the cloud
desktop management node

S1401

Determine, by the cloud
desktop service node according to the clearing period and the
preset clearing threshold of the cache space, whether to clear
the storage unit

S1402

No

Yes

Clear the data in the storage unit according to the access
popularity and a preset popularity threshold of the data in the
storage unit

S1403

End

FIG. 14

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2959959 A1
- CN 102122303 A

- CN 112965955 A

**Non-patent literature cited in the description**

- *Online cost optimization algorithms for tiered cloud storage services - Science Direct*, 01 January 2019